# EUROPÄISCHE PATENTSCHRIFT

(11) **EP 1 724 481 B1**
(45) Veröffentlichungstag und Bekanntmachung des Hinweises auf die Patenterteilung: **12.03.2008**
(21) Anmeldenummer: 06006401.1
(22) Anmeldetag: 28.03.2006
(51) Int. Cl.: F16D 3/66, F16D 3/72, F16D 3/74, F16D 3/56

(54) **Membrankupplung mit integrierter Drehelastizität**
Membrane coupling with integrated torsional resilience
Accouplement à membrane avec élasticité de rotation integrée

(30) Priorität: 01.04.2005 DE 102005014985
(43) Veröffentlichungstag der Anmeldung: 22.11.2006
(73) Patentinhaber: Voith Turbo BHS Getriebe GmbH, 87527 Sonthofen (DE)
(72) Erfinder: Heidrich, Günther, Dipl.-Ing., 87545 Burgberg (DE)
(74) Vertreter: Jordan, Volker Otto Wilhelm

(56) Entgegenhaltungen:
- EP-A1- 0 211 090
- EP-A1- 0 627 571
- DE-U1- 8 337 492
- FR-A- 1 448 192
- GB-A- 963 626

## Beschreibung

Die Erfindung betrifft eine Membrankupplungs-Drehmomentübertragungseinrichtung, wie üblicherweise kurz unter dem Begriff "Membrankupplung" angesprochen, und spezieller ein entsprechendes, für eine Eingliederung in eine derartige Drehmomentübertragungseinrichtung vorgesehenes bzw. darin eingegliedertes Membrankupplungselement, umfassend wenigstens eine biegeelastische Membranscheibe, die einen radial äußeren und einen radial inneren Umfangsbereich aufweist und über die ein Drehmomentübertragungspfad zwischen einer Eingangsseite und einer Ausgangsseite des Membrankupplungselements (bzw. der Drehmomentübertragungseinrichtung) verläuft sowie speziell auch ein entsprechendes, für eine Eingliederung in eine derartige Drehmomentübertragungseinrichtung vorgesehenes bzw. darin eingegliedertes Membrankupplungselement, umfassend eine Gruppe aus wenigstens zwei biegeelastischen Membranscheiben, die jeweils einen radial äußeren und einen radial inneren Umfangsbereich aufweisen und an paarweise einander zugeordneten ihrer Umfangsbereiche miteinander in Drehmomentübertragungsverbindung stehen und über die ein Drehmomentübertragungspfad zwischen einer Eingangsseite und einer Ausgangsseite des Membrankupplungselements (bzw. der Drehmomentübertragungseinrichtung verläuft.

Derartige Membrankupplungen bzw. Membrankupplungselemente und Verfahren zur Herstellung derartiger Membrankupplungen bzw. Membrankupplungselemente sind beispielsweise aus der GB 963626A, EP 0627571A, EP 0 211 090 B1 und der EP 0 462 991 B1 bekannt. Sie sind herkömmlich vorgesehen für die drehstarre Übertragung von Drehmomenten und Drehzahlen bei gleichzeitigem Ausgleich von axialem oder/und radialem oder/und winkligem Versatz von zu verbindenden Wellenenden oder sonstigen Anschlüssen, insbesondere Maschinenanschlüssen. Membrankupplungen sind in der Tat im Fachgebiet als ein Untertyp so genannter "Drehstarrer Ausgleichskupplungen" bekannt, wie sich beispielsweise aus "Dubbel - Taschenbuch für den Maschinenbau", 19. Auflage, Kapitel G "Mechanische Konstruktionselemente", Abschnitt 3 "Kupplungen und Bremsen", Unterabschnitt 3.2 (Seiten G64 bis G66), ergibt. Hiervon werden so genannte "Elastische, nicht schaltbare Kupplungen" mit den Untertypen "Metallelastische Kupplungen" und "Elastomerkupplungen" unterschieden, die sich unter Kraft- oder Momentenbelastung elastisch verformen und zur bis auf durch die integrierte Drehelastizität gegebenes elastisches Drehbewegungsspiel schlupffreien Übertragung von Drehbewegungen und vermittels ihrer Drehelastizität zur Verringerung von Drehmomentschwankungen sowie Drehmomentstößen dienen und häufig ebenfalls axiale oder/und radiale oder/und winklige Fluchtungsfehler ausgleichen. Es wird auf Unterabschnitt 3.3 im angesprochenen Abschnitt und Kapitel von Dubbel verwiesen (Seiten G66 bis G69).

Membranen von Membrankupplungen sind in der Regel von dünnen biegeweichen Blechen gebildet, die in Vollscheiben- oder Segmentstruktur ausgebildet sein können, je nach den gewünschten Eigenschaften. Eine Membrankupplung besteht in der Regel aus zwei Naben, wenigstens einer, in der Regel wenigstens zwei Membranen (Membranscheiben) und Verbindungselementen. Neben einer nur eine Membrane aufweisende Einfachanordnung ist besonders zweckmäßig eine Doppelanordnung, bei der zwei Membranscheiben hintereinander geschaltet sind. Es können auch mehr Membranscheiben hintereinander geschaltet sein, beispielsweise vier Membranscheiben, zur Bildung einer Vierfach-Anordnung. Es können mehrere, beispielsweise zwei derartige Membranscheibenanordnungen (Membrankupplungselemente) mittels einer Zwischenhülse oder Verbindungswelle zusammengekoppelt sein, insbesondere um Radialversatz gut ausgleichen zu können.

Entsprechend dem Paradigma, dass Membrankupplungen zur im Wesentlichen spielfreien drehstarren Übertragung von Drehmomenten dienen, wurden Rest-Torsionselastizitäten in einer Membrankupplung herkömmlich als durch Optimierung der Membrankupplung so weit wie möglich zu unterdrückendes Stör-Phänomen behandelt, wobei man auch schon daran gedacht hat, dass ein in einer Membrankupplung integrierter Schwingungsdämpfer zur Unterdrückung von axialen Schwingungen und zur Erhöhung einer Steifigkeit in der Axialrichtung auch Rest-Torsionsschwingungen mit unterdrücken wird (vgl. EP 0 627 571 B1 bzw. die korrespondierende DE 694 23 386 T2). Ferner hat der Autor der schon angesprochenen EP 0 211 090 B1 an die Möglichkeit gedacht, dass eine Verbindungswelle zwischen zwei jeweils von einem Membranscheibenpaar gebildeten Membrankupplungselementen (in der EP 0 211 090 B1 als biegeelastische Kupplungselemente angesprochen) selbst torsionselastisch oder/und biegeelastisch sein könnte. Auch die EP 0 462 991 B1 erwägt eine spezielle drehelastische Bauform einer Membrankupplung, bei der eine Torsionswelle als Zwischenhülse oder Verbindungswelle zwischen zwei von jeweils zwei Membranscheiben gebildeten Membrankupplungselementen (in der EP 0 462 991 B1 als biegeelastische Kupplungselemente angesprochen) vorgesehen ist.

Die DE 199 12 797 C2 zeigt eine elastische Wellenkupplung zum Ausgleich radialer, axialer und winkliger Verlagerungen zweier miteinander zu verbindenden Wellenenden, die aus zwei axial nacheinander geschalteten Kupplungsanordnungen besteht, von denen die eine auf Grundlage eines Elastomerkörpers axial-, torsions- und winkelverlagerungsfähig, aber im Wesentlichen radialverlagerungssteif ist und die andere auf Grundlage eines nicht elastomeren Federmittels axial- und winkelverlagerungsfähig, aber weitgehend torsionsstarr ist. Als nicht-elastomeres Federmittel dienen Stahlfederlaschen oder ein korbförmiger Federstahlkörper.

Die DE 43 04 611 C2 zeigt eine ebenfalls von zwei axial nacheinander geschalteten Kupplungsanordnungen gebildete Wellenkupplung, von denen die eine als torsionssteife Membrankupplung und die andere als so genannte Gummiring-Kupplung ausgebildet ist, die alleine der Wellenkupplung eine Drehelastizität verleiht.

Verschiedene Membrankupplungskonstruktionen sind ferner aus der DE 27 41 652 A1, der DE 203 06 231 U1 und der DE 20 2004 006 442 U1 bekannt. Diese Druckschriften stellen ebenfalls mehr oder weniger deutlich heraus, dass die betreffende Membrankupplung zur drehsteifen bzw. winkelgetreuen Drehmomentübertragung zwischen Maschinenelementen dienen. Auch die DE 102 31 995 A1 zeigt eine Art Membrankupplung als ein Beispiel einer drehsteifen, verdrehspielfreien elastischen Kupplung.

Demgegenüber zeigen die DD 287 565 A5, die DE-PS 534 955, die DE-PS 682 665 und die US 1,403,272 verschiedene Arten von drehelastischen bzw. in Drehrichtung nachgiebigen Wellenkupplungen.

Zusammenfassend ist festzustellen, dass Membrankupplungen im Fachgebiet grundsätzlich für die drehstarre Übertragung von insbesondere sehr hohen Drehmomenten bei hohen und sehr hohen Drehzahlen und gleichzeitigem Ausgleich von axialem, radialem und winkligem Wellenversatz vorgesehen sind, wohingegen für den Ausgleich von Wellenschwingungen und stoßartigen Belastungen verschiedene Arten von drehelastischen Kupplungen üblich sind.

Aufgabe der Erfindung ist es, eine Membrankupplung bzw. ein Membrankupplungselement der angesprochenen Art bereitzustellen, das die angesprochenen Wellenversatzarten ausgleichen kann und zugleich den Verzicht auf eine zusätzliche drehelastische Kupplung im Drehmomentübertragungspfad ermöglicht, wenn Wellendrehschwingungen oder/und stoßartige Drehmomentbelastungen aufzunehmen bzw. zu mildem sind. Zwischen Eingangsseite und Ausgangsseite sollen dabei nur vergleichsweise geringe Rückstellkräfte auftreten. Zur Lösung wenigstens einer dieser Aufgaben schlägt die Erfindung - abweichend vom grundsätzlich bestehenden Paradigma der Drehsteifigkeit einer Membrankupplung - vor, dass das Membrankupplungselement mit einer hierin integrierten Drehelastikanordnung ausgeführt ist, die dem Membrankupplungselement selbst eine Drehelastizität verleiht.

Bereitgestellt wird nach der Erfindung ein Membrankupplungselement einer Drehmomentübertragungseinrichtung, gemäß Anspruch 1.

Wesentlicher Gesichtspunkt der Erfindungsvorschläge ist, dass die die Drehelastizität verleihende Drehelastikanordnung im Drehmomentübertragungspfad nicht einfach als gegenüber der Membranscheibe bzw. den Membranscheiben zusätzliches Kupplungselement dieser bzw. diesen nachgeschaltet ist, was darauf hinauslaufen würde, dass die Funktion des Wellenversatzausgleichs und die Funktion der Aufnahme und Minderung von Torsionsschwingungen und Drehmomentstößen gewissermaßen von gesonderten, nur zusammengekoppelten Elementen erfüllt wird. Erfindungsgemäß ist die Drehelastikanordnung vielmehr als integraler Bestandteil des Membrankupplungselements vorgesehen, derart, dass die Membranscheibe bzw. die Membranscheiben einerseits und die Drehelastikanordnung andererseits in ihrer Funktion sich aufeinander beziehen und unmittelbar zusammenwirken. Hierzu ist erfindungsgemäß vorgesehen, dass die Drehelastikanordnung an den Umfangsbereichen zugfest angebunden ist und sich in Umfangsrichtung entlang diesen verteilt erstreckt.

Durch die Erfindungslösungen wird erreicht, dass von der Drehelastikanordnung in Folge einer Relatiwerdrehung zwischen den Umfangsbereichen, also in Folge des Drehwinkelausgleichs der Drehelastikanordnung ausgeübte axiale Rückstellkräfte von der Membranscheibe bzw. den Membranscheiben aufgenommen und ausgeglichen werden, so dass an dem Membrankupplungselement bzw. der Membrankupplung angekoppelte Maschinenelemente diese Rückstellkräfte nicht oder nur noch in einem geringen Maße aufnehmen und axial abstützen müssen. Die Maschinen werden deswegen nicht schädlich oder störend durch axiale Rückstellkräfte in Folge der Drehelastizität im Drehmomentübertragungspfad belastet.

Durch die Verteilung der Drehelastikanordnung in Umfangsrichtung wird überdies erreicht, dass auf Grundlage des Erfindungsvorschlags Membrankupplungselemente bereitgestellt werden können, die für höchste Drehzahlen und sehr hohe Drehmomente tauglich sind, da einerseits Unwuchten vermieden werden können, insbesondere auch auf Drehspiel zurückzuführende Unwuchten, und andererseits durch die Verteilung der über die Drehelastikanordnung zu übertragenden Drehmomente in Umfangsrichtung die lokale Drehmomentbelastung entsprechend reduziert werden kann, besonders wirkungsvoll in dem Falle, dass die Drehelastikanordnung radial außen an der Membranscheibe bzw. den Membranscheiben vorgesehen ist. Neben der bevorzugt realisierten Unwuchtvermeidung durch Spielfreiheit kann aus der Spielfreiheit vorteilhaft eine hohe Laufpräzision folgen.

Die Drehelastikanordnung kann direkt, unmittelbar an den einander paarweise zugeordneten Umfangsbereichen angebunden sein, oder auch indirekt oder mittelbar, je nach Zweckmäßigkeit. Es ist auch nicht ausgeschlossen, dass die Drehelastikanordnung an dem einen Umfangsbereich unmittelbar und an dem anderen Umfangsbereich mittelbar angebunden ist, was in der Regel aber nicht besonders zweckmäßig sein wird.

Für eine mittelbare Anbindung wird als besonders bevorzugt vorgeschlagen, dass die Drehelastikanordnung vermittels eines gesonderten, die Drehelastikanordnung haltenden Ringteils am Umfangsbereich angebunden ist. Das Ringteil ist bevorzugt ein im Wesentlichen drehstarres und zug- und kompressionsstarres Ringteil, beispielsweise aus Kunststoffmaterial oder - bevorzugt - Metallmaterial, um eine definierte Anbindung an den ebenfalls im Wesentlichen drehstarren und in der Regel zug- und kompressionssteifen Umfangsbereichen zu ermöglichen, die vorzugsweise - ebenso wie die Membranscheibe bzw. die Membranscheiben selbst - aus Metallmaterial gefertigt sind.

Es kommt durchaus in Betracht, die Drehelastikanordnung aus einem Elastomermaterial herzustellen, beispielsweise eine Drehelastikanordnung in Form eines Elastomerrings oder einer Reihe von sich in Umfangsrichtung erstreckenden Elastomersegmenten vorzusehen. Demgegenüber ist eine Ausführung der Drehelastikanordnung als drehelastische Federanordnung auf Basis elastischer, nicht-elastomerer Federabschnitte oder Federelemente, beispielsweise biegeelastischer oder zug- oder druckelastischer Federelemente oder Federabschnitte bevorzugt. Allgemein wird daran gedacht, dass die Drehelastikanordnung als drehelastische Federanordnung ausgeführt ist, vorzugsweise auf Grundlage von metallelastischen oder kunststoffelastischen Federelementen oder Federabschnitten.

Unabhängig von der Ausführung der Drehelastikanordnung bzw. der drehelastischen Federanordnung im Einzelnen ist es besonders bevorzugt, dass die Federanordnung oder/und das Ringteil (wenn vorgesehen) einen am Umfangsbereich der Membranscheibe bzw. wenigstens einer der Membranscheiben angeordneten Umfang des Membrankupplungselements bildet. Die Federanordnung bzw. das Ringteil kann sich hierzu beispielsweise im Radialbereich des Umfangsbereichs an diesen in axialer Richtung, ggf. auch in radialer Richtung, anschließen.

Anknüpfend an den Erfindungsgedanken, dass durch die Membranscheibe bzw. Membranscheiben axiale Rückstellkräfte in Folge der Relatiwerdrehung zwischen den Umfangsbereichen unter der Wirkung der Drehelastikanordnung aufgenommen und zumindest teilweise ausgeglichen werden und dass die Membranscheibe bzw. die Membranscheiben dabei einen entsprechenden axialen Hub aufnehmen und ausgleichen können, wird als besonders bevorzugt vorgeschlagen, dass die Drehelastikanordnung, insbesondere die Federanordnung, in Bezug auf axial wirkende Kräfte steifer, vorzugsweise wesentlich steifer als die Membranscheibe bzw. die Membranscheiben ausgeführt ist. Die Federanordnung kann in Bezug auf axial zwischen den Umfangsbereichen wirkende Kräfte im Wesentlichen unelastisch und unnachgiebig sein, zumindest in einem relaxierten Zustand der Federanordnung. Ferner wird daran gedacht, dass die Drehelastikanordnung, insbesondere die Federanordnung, in Bezug auf radial wirkende Kräfte steifer, vorzugsweise wesentlich steifer als die Membranscheibe bzw. die Membranscheiben ausgeführt : ist. Die Federanordnung kann in Bezug auf in radialer Richtung zwischen den Umfangsbereichen wirkende Kräfte im Wesentlichen unelastisch und unnachgiebig ausgeführt sein.

Die Federanordnung kann zweckmäßig Federabschnitte aufweisen, die in Umfangsrichtung entlang wenigstens einem der Umfangsbereiche verteilt angeordnet sind. Dabei kann die Federanordnung vorteilhaft wenigstens eine Gruppe von entlang dem Umfangsbereich verteilt angeordneten, jeweils wenigstens zwei in Umfangsrichtung benachbarte Federabschnitte miteinander verbindenden Verbindungsabschnitten oder wenigstens einen alle Federabschnitte miteinander verbindenden Verbindungsringabschnitt aufweisen. Weiterbildend wird vorgeschlagen, dass die Federanordnung an ihrem Verbindungsringabschnitt bzw. an ihren Verbindungsabschnitten am Umfangsbereich angebunden ist, ggf. vermittels des Ringteils.

Eine vorteilhafte Ausführung der Federanordnung zeichnet sich dadurch aus, dass die Federanordnung in Umfangsrichtung verteilt angeordnete, in Umfangsrichtung biegeelastische Federelemente aufweist. Diese Federelemente können zweckmäßig beispielsweise als Federstege, Federstäbe oder Federblätter ausgeführt sein. Die Federelemente können die schon angesprochenen Federabschnitte bilden. Man kann aber auch vorsehen, dass die Federelemente voneinander gesonderte Federelemente sind.

Man kann vorteilhaft vorsehen, dass die Federelemente zumindest teilweise einen axialen Abstand zwischen den einander paarweise zugeordneten Umfangsbereichen überbrücken. Eine Anordnung der Umfangsbereiche in axialem Abstand voneinander wird in der Regel besonders zweckmäßig sein. An der axialen Überbrückung kann wenigstens ein Ringteil mitwirken, wenn vorgesehen, sowie - im Falle, dass die Federelemente die angesprochenen Federabschnitte bilden - wenigstens eine Gruppe von Verbindungsabschnitten oder wenigstens ein Verbindungsringabschnitt der Federanordnung. Insbesondere können diese Komponenten eine nur teilweise axiale Überbrückung durch die Federelemente selbst vervollständigen, so dass der radiale Abstand zwischen den Umfangsbereichen überbrückt und die Drehmomentübertragungsverbindung zwischen diesen erreicht ist. Ferner kann an der Überbrückung wenigstens ein Zwischenring der Federanordnung mitwirken, wie im Folgenden angesprochen.

Insbesondere für die Bereitstellung eines vergleichsweise großen Relativ-Drehwinkelbereichs, der eine Relativverdrehung zwischen den Umfangsbereichen unter der Wirkung der Federanordnung ermöglicht, wird weiterbildend oder als Alternative vorgeschlagen, dass Federelemente einer ersten Gruppe zumindest teilweise einen axialen Abstand zwischen dem einen der einander paarweise zugeordneten Umfangsbereichen und einem Zwischenring der Federanordnung überbrücken und dass Federelemente einer zweiten Gruppe zumindest teilweise einen axialen Abstand zwischen dem anderen der einander paarweise zugeordneten Umfangsbereichen und dem oder einem weiteren Zwischenring der Federanordnung überbrücken. An diese Überbrückung kann ebenfalls wenigstens ein Ringteil sowie ggf. wenigstens eine Gruppe von Verbindungsabschnitten oder wenigstens ein Verbindungsringabschnitt der Federanordnung mitwirken. Insbesondere können diese Komponenten eine nur teilweise axiale Überbrückung durch die Federelemente selbst vervollständigen. Eine entsprechende Überbrückung mittels wenigstens einer weiteren Gruppe von Federelementen kann zwischen zwei axial im Abstand angeordneten Zwischenringen vorgesehen sein.

Ferner kann es sehr zweckmäßig sein, wenn die Federelemente zumindest teilweise einen radialen Abstand zwischen den einander paarweise zugeordneten Umfangsbereichen überbrücken oder/und dass die Federelemente zumindest teilweise einen radialen Abstand zwischen dem einen der einander paarweise zugeordneten Umfangsbereichen und einem Zwischenring der Federanordnung sowie zumindest teilweise einen radialen Abstand zwischen dem anderen der einander paarweise zugeordneten Umfangsbereichen und dem Zwischenring überbrücken. An dieser radialen Überbrückung kann ferner wenigstens ein Ringteil sowie ggf. wenigstens eine Gruppe von Verbindungsabschnitten oder wenigstens ein Verbindungsringabschnitt der Federanordnung mitwirken. Insbesondere können diese Komponenten eine nur teilweise radiale Überbrückung durch die Federelemente selbst vervollständigen, so dass der radiale Abstand zwischen den Umfangsbereichen überbrückt und die Drehmomentübertragungsverbindung zwischen diesen erreicht ist. Man kann vorteilhaft alternativ oder zusätzlich vorsehen, dass Federelemente einer ersten Gruppe zumindest teilweise einen radialen Abstand zwischen dem einen der einander paarweise zugeordneten Umfangsbereichen und einem Zwischenring der Federanordnung überbrücken und dass Federelemente einer zweiten Gruppe zumindest teilweise einen radialen Abstand zwischen dem anderen der einander paarweise zugeordneten Umfangsbereichen und dem oder einem weiteren Zwischenring der Federanordnung überbrücken. An dieser Überbrückung kann ebenfalls wenigstens ein Ringteil sowie ggf. wenigstens eine Gruppe von Verbindungsabschnitten oder wenigstens ein Verbindungsringabschnitt der Federanordnung mitwirken bzw. diese Überbrückung kann hierdurch vervollständigt sein. Eine entsprechende Überbrückung vermittels wenigstens einer weiteren Gruppe von Federelementen kann zwischen zwei radial im Abstand angeordneten Zwischenringen vorgesehen sein.

Unabhängig davon, ob die Federelemente axial überbrücken bzw. an einer axialen Überbrückung mitwirken oder radial überbrücken oder an einer radialen Überbrückung mitwirken, wird weiterbildend vorgeschlagen, dass die Federelemente eine in Richtung ihrer Erstreckung zwischen den Umfangsbereichen bzw. zwischen dem Umfangsbereich und dem/einen Zwischenring variierende wirksame Querschnittsfläche aufweisen. Es wird in diesem Zusammenhang vor allem daran gedacht, dass die Querschnittsfläche in Richtung der Erstreckung der Federelemente derart variiert, dass die Federelemente in einem mittleren Bereich ihrer Erstreckungslänge weniger biegesteif als in den Endbereichen ihrer Erstreckungslänge sind oder/und dass die Federelemente in den Endbereichen ihrer Erstreckungslängen verschiedene Biegesteifigkeiten aufweisen. Die Variation der wirksamen Querschnittsfläche entlang der Erstreckungsrichtung der Federelemente ist bevorzugt derart, dass Biegespannungsüberhöhungen entlang ihrer Erstreckungslänge weitgehend vermieden werden. Als besonders bevorzugt wird in diesem Zusammenhang insbesondere daran gedacht, dass die wirksame Querschnittsfläche derart entlang der jeweiligen Erstreckungslänge der Federelemente variiert, dass bei einer Biegeauslenkung in Folge einer Relativverdrehung zwischen den Umfangsbereichen entlang der Erstreckungslänge im Wesentlichen eine konstante Biegespannung im Federelement auftritt. In der Regel wird es zweckmäßig sein, wenn im Falle von sich in axialer Richtung erstreckenden, also zumindest teilweise einen axialen Abstand überbrückenden Federelementen die Federelemente in einem Bereich geringerer Biegesteifigkeit eine größere Ausdehnung in Radialrichtung als in Umfangsrichtung aufweisen, um eine gewünschte Biegeelastizität zu erreichen und Spannungen im Material so weit wie möglich zu vermeiden. Für den Fall von zumindest teilweise einen radialen Abstand überbrückenden Federelementen wird entsprechend vorgeschlagen, dass die Federelemente in einem Bereich geringerer Biegesteifigkeit eine größere Ausdehnung in Axialrichtung als in Umfangsrichtung aufweisen.

Bezug nehmend auf die Ausführung der Federanordnung mit miteinander verbundenen Federabschnitten wird als besonders bevorzugt vorgeschlagen, dass Federanordnung in einem jeweiligen Übergangsbereich zwischen den die Federabschnitte bildenden Federelementen und den Verbindungsabschnitten bzw. dem Verbindungsringabschnitt abgerundet ausgeführt ist, um Biegespannungsüberhöhung in Folge von Kerbwirkung zu vermeiden.

Insgesamt wird durch die Ausführung der Federanordnung zur Vermeidung von Biegespannungsüberhöhungen erreicht, dass Materialermüdungen und Beschädigungen der Federanordnung in Folge des laufenden Betriebs vorgebeugt wird und dass eine hohe Drehmomentübertragungsfähigkeit erreicht wird.

Eine bevorzugte Ausgestaltung der Federanordnung der schon allgemein angesprochenen Art mit miteinander verbundenen Federabschnitten zeichnet sich dadurch aus, dass die Federanordnung zwei axial im Abstand voneinander angeordnete Gruppen von Verbindungsabschnitten oder zwei Verbindungsringabschnitte aufweist, die jeweils an einem zugeordneten der Umfangsbereiche angebunden sind. Nach einer Ausführungsform weist die Federanordnung wenigstens einen einteilig ausgeführten, von den sich mäanderförmig in Umfangsrichtung und axialer Richtung erstreckenden Federabschnitten und Verbindungsabschnitten gebildeten Federring auf. Nach einer anderen Ausführungsform weist die Federanordnung wenigstens einen einteilig ausgeführten, von den beiden Verbindungsringabschnitten und den sich axial zwischen diesen erstreckenden Federabschnitten gebildeten Federring auf, der zweckmäßig in Umfangsrichtung verteilt Durchbrüche aufweisen kann, die von den Verbindungsringabschnitten und jeweils zwei benachbarten Federabschnitten begrenzt sind.

Nach einer anderen Ausführungsmöglichkeit bilden die voneinander gesonderten Federelemente zusammen mit zwei axial im Abstand voneinander angeordneten, die Federelemente haltenden Ringteilen einen Federring, der in Umfangsrichtung verteilt Durchbrüche aufweisen kann, die von den Ringteilen und jeweils zwei benachbarten Federelementen begrenzt sind.

Nach einer anderen Ausführungsmöglichkeit ist vorgesehen, dass die Federelemente, ggf. Blattfederelemente, einen am Zwischenring zugfest angebundenen Basisabschnitt und zwei einteilig über den Basisabschnitt zusammenhängende, axial gegeneinander versetzte Überbrückungsabschnitte aufweisen, die jeweils an einem zugeordneten der Umfangsbereiche zugfest angebunden sind. Alternativ oder zusätzlich kann vorgesehen sein, dass die Federelemente, ggf. Blattfederelemente, der ersten Gruppe und die Federelemente, ggf. Blattfederelemente, der zweiten Gruppe axial gegeneinander versetzt sind oder/und in Umfangsrichtung sich abwechselnd vorgesehen sind und jeweils einerseits am Zwischenring zugfest angebunden und andererseits an einem zugeordneten der Umfangsbereiche zugfest angebunden sind.

In der Regel wird der Zwischenring radial innerhalb des Radialbereichs der Umfangsbereiche angeordnet sein. Dies ermöglicht eine gute Ausnutzung des in radialer Richtung zur Verfügung stehenden Bauraums. Man kann durchaus aber auch vorsehen, dass der Zwischenring radial außerhalb des Radialbereichs der Umfangsbereiche angeordnet ist.

Die schon angesprochene Anbindung der Federanordnung mittels eines Ringteils am Umfangsbereich ist speziell auch für die hier zuletzt angesprochenen Ausführungsformen vorteilhaft. Es wird in diesem Zusammenhang daran gedacht, dass die Federelemente mittels eines jeweiligen Ringteils am betreffenden Umfangsbereich angebunden sind, wobei wenigstens eines der Ringteile von einer Ringbasis axial vorstehende Federabschnitte aufweist, die radial elastisch auslenkbar sind und an denen die Federelemente angebunden sind. Dies ermöglicht die Aufnahme von bei einer Relatiwerdrehung der Umfangsbereiche unter der Wirkung der Federanordnung auftretender Rückstellkräfte sowie einen entsprechenden Radialausgleich, unter Entlastung der Membranscheibe bzw. der Membranscheiben.

Gemäß einer besonders bevorzugten Ausführungsmöglichkeit ist vorgesehen, dass die Federanordnung mit dem jeweiligen Umfangsbereich oder Ringteil einteilig zusammenhängt oder - vorzugsweise - unter Anwendung einer stoffschlüssigen Verbindungstechnik stoffschlüssig an dem jeweiligen Umfangsbereich oder Ringteil angebunden ist. Es können so Drehmomente, insbesondere auch hohe Drehmomente, bei sehr hohen Drehzahlen zuverlässig über das Membrankupplungselement übertragen werden.

Ist wenigstens ein Ringteil vorgesehen, so wird daran gedacht, dass dieses zumindest in Bezug auf in Axialrichtung wirkende Kräfte formschlüssig oder/und unter Anwendung einer stoffschlüssigen Verbindungstechnik stoffschlüssig an dem jeweiligen Umfangsbereich angebunden ist. Eine formchlüssige Anbindung kann beispielsweise mittels Schraubbolzen oder dergleichen erreicht werden. Demgegenüber ist aber eine stoffschlüssige Verbindungstechnik bevorzugt, die durchaus aber mit einem formschlüssigen Drehmitnahmeeingriff zwischen dem Ringteil und dem jeweiligen Umfangsbereich kombiniert sein kann. Beispielsweise können das Ringteil und der Umfangsbereich mit Drehmitnahmeformationen ausgeführt sein, die formschlüssig ineinander greifen.

Weist die Federanordnung wenigstens einen Zwischenring auf, so ist es bevorzugt, dass Federelemente der Federanordnung, insbesondere die schon angesprochenen Federelemente, unter Anwendung einer stoffschlüssigen Verbindungstechnik stoffschlüssig an dem Zwischenring angebunden sind.

Als stoffschlüssige Verbindungstechnik ist eine Schweißtechnik bevorzugt. Besonders zweckmäßig, insbesondere für eine Auslegung des Membrankupplungselements für hohe Drehzahlen und hohe Drehmomente, ist eine Elektronenstrahl-Schweißtechnik.

Betreffend die Ausführungsvariante der Federanordnung mit miteinander verbundenen Federelementen ist es bevorzugt, dass die Federelemente und die Verbindungsabschnitte bzw. der Verbindungsringabschnitt durch eine Materialentfernungstechnik aus einem Federringrohling herausgearbeitet sind. Im Falle einer besonders bevorzugten Ausführung der Federanordnung aus Metallmaterial wird als besonders bevorzugt an eine Funkerosionstechnik gedacht. Es kommt durchaus aber auch in Betracht, die Federanordnung aus Kunststoffmaterial, beispielsweise Polyurethan, auszuführen. In diesem Falle können andere einen präzisen Materialabtrag ermöglichende Materialentfernungstechniken zweckmäßig angewendet werden, soweit von einem entsprechenden Federringrohling ausgegangen wird.

Das Membrankupplungselement kann mit einer darin integrierten Drehschwingungsdämpfungsanordnung ausgeführt sein, die auf Relatiwerdrehbewegungen zwischen den Umfangsbereichen anspricht. Es kann so beispielsweise einem Aufschaukeln von Drehschwingungen, etwa in einem Antriebsstrang, entgegengewirkt werden und ein gewünschtes dynamisches Verhalten des Membrankupplungselements erreicht werden. Die Drehschwingungsdämpfungsanordnung kann vorteilhaft wenigstens einen Reibungsdämpfer umfassen, der wenigstens zwei jeweils mit einem der Umfangsbereiche drehgekoppelte Reibflächen aufweist, die miteinander reiben. Hierzu wird weiterbildend vorgeschlagen, dass ein direkt oder indirekt an einem ersten der Umfangsbereiche angebundenes Dämpfungsringteil axial in Richtung zum anderen Umfangsbereich vorstehende, radial elastisch auslenkbare, erste Reibflächen aufweisende Federabschnitte umfasst, die mit einer ringförmigen zweiten Reibfläche im Bereich des zweiten Umfangsbereichs oder eines Gegen-Dämpfungsringteils, welches am zweiten Umfangsbereich angebunden ist, reiben. Zweckmäßig kann man eine dem Reibungsdämpfer zugeordnete, vorzugsweise zumindest teilweise in diesen integrierte Schmiermittelzufuhr vorsehen.

Ferner wird vorgeschlagen, dass die Drehschwingungsdämpfungsanordnung alternativ oder zusätzlich wenigstens einen Flüssigkeitsverdrängungsdämpfer umfasst, der wenigstens eine Flüssigkeitsaufnahmekammer aufweist, deren Flüssigkeitsaufnahmevolumen in Abhängigkeit von einem Relativdrehwinkel zwischen den Umfangsbereichen variabel ist. Hierzu wird weiterbildend vorgeschlagen, dass der Flüssigkeitsverdrängungsdämpfer wenigstens einen durch ein Unterteilungselement in zwei Flüssigkeitsaufnahmekammem unterteilten Aufnahmeraum umfasst, wobei das Unterteilungselement mit dem einen Umfangsbereich drehgekoppelt ist und den Aufnahmeraum begrenzende Wandungsflächen mit dem anderen Umfangsbereich drehgekoppelt sind. In der Regel wird man wenigstens eine vorzugsweise im Unterteilungselement ausgebildete Drosselverbindung zwischen den Flüssigkeitsaufnahmekammern vorsehen. Der Flüssigkeitsverdrängungsdämpfer kann vorteilhaft einen darin integrierten Reibungsdämpfer wie vorangehend vorgeschlagen, umfassen. Es kann eine dem Flüssigkeitsverdrängungsdämpfer zugeordnete, vorzugsweise zumindest teilweise in diesen integrierte Dämpfungsflüssigkeitszufuhr vorgesehen sein, zur Zufuhr von Dämpfungsflüssigkeit (ggf. Schmieröl) in die Flüssigkeitsaufnahmekammer oder Flüssigkeitsaufnahmekammern.

Betreffend die Anbindung der Drehelastikanordnung, insbesondere Federanordnung an der Membranscheibe bzw. den Membranscheiben wird, wie schon erwähnt, als besonders bevorzugt daran gedacht, dass die paarweise einander zugeordneten Umfangsbereiche radial äußere Umfangsbereiche sind bzw. dass wenigstens einer dieser Umfangsbereiche ein radial äußerer Umfangsrandbereich der bzw. einer jeweiligen Membranscheibe ist. Diese Ausgestaltung ist insbesondere für paarweise oder in einer gradzahligen Anzahl vorgesehene Membranscheiben zweckmäßig. Es soll aber nicht ausgeschlossen sein, dass die betreffenden Umfangsbereiche radial innere Umfangsbereiche sind, beispielsweise wenn das Membrankupplungselement nur eine einzige Membranscheibe oder eine ungradzahlige Anzahl benachbarter Membranscheiben aufweist.

Die Erfindung stellt ferner bereit eine Membrankupplungs-Drehmomentübertragungseinrichtung, umfassend wenigstens ein erfindungsgemäßes Membrankupplungselement, welches axial zwischen einem eine Eingangsseite der Drehmomentübertragungseinrichtung bildenden Anschlussteil und einem eine Ausgangsseite der Drehmomentübertragungseinrichtung bildenden Anschlussteil angeordnet ist und mit diesen in Drehmomentübertragungsverbindung steht, oder dessen wenigstens eine Membranscheibe axial zwischen einem eine Eingangsseite der Drehmomentübertragungseinrichtung bildenden Anschlussteil und einem eine Ausgangsseite der Drehmomentübertragungseinrichtung bildenden Anschlussteil angeordnet ist und mit diesen in Drehmomentübertragungsverbindung steht. Die Anschlussteile können beispielsweise als übliche Wellenanschlussflansche ausgeführt sein. Die Membrankupplungs-Drehmomentübertragungseinrichtung kann zweckmäßig mehrere im axialen Abstand voneinander angeordnete, miteinander drehgekoppelte Membrankupplugnselemente nach der Erfindung aufweisen. Beispielsweise kann eine entsprechende Membrankupplungs-Drehmomentübertragungseinrichtung wenigstens eine Verbindungswelle oder Verbindungshülse umfassen, die wenigstens ein dem einen Anschlussteil näheres Membrankupplungselement mit wenigstens einem den anderen Anschlussteil näheren Membrankupplungselement verbindet.

Die Anschlussteile und - wenn vorgesehen - die Verbindungswelle können an einem Umfangsbereich, insbesondere an einem radial inneren Umfangsbereich, einer jeweiligen Membranscheibe angebunden sein, vorzugsweise unter Anwendung einer stoffflüssigen Verbindungstechnik, zweckmäßig einer Schweißtechnik, besonders zweckmäßig einer Elektronenstrahl-Schweißtechnik. Das erfindungsgemäße Membrankupplungselement kann eine Teilkomponente einer so genannten Membrankupplung sein, die als erfindungsgemäße Membrankupplungs-Drehmomentübertragungseinrichtung zu identifizieren ist. Auf Grundlage vorgehaltener Membrankupplungselemente nach der Erfindung kann ein Herstellerbetrieb bedarfs- und anforderungsgerecht jeweiligen Spezifikationen entsprechende Membrankupplungen bereitstellen, indem eines oder mehrere Membrankupplungselemente mit zugehörigen Komponenten, insbesondere den Anschlussteilen und ggf. wenigstens einer Verbindungswelle, zusammengefügt wird bzw. werden. So kann man ein Standard-Membrankupplungselement unverändert verwenden bei angewachsenen Wellenflanschen, bei Wellennaben, die seitlich oder innerhalb des Kupplungselements angeordnet sind, bei Wellennaben mit anderen vorkommenden Welle/Nabe-Verbindungsarten und bei Zwischenwellen von unterschiedlicher Funktion und Abmessung.

Die Erfindung wird im Folgenden anhand von in den Figuren gezeigten Ausführungsbeispielen ohne Beschränkung der Allgemeinheit näher erläutert. Es stellen dar:
- Fig. 1: einen Längsschnitt durch eine erste Ausführungsform eines erfindungsgemäßen Membrankupplungselements mit zwei Membranscheiben als Teil einer das Membrankupplungselement aufweisenden, fachsprachlich als Membrankupplung bezeichenbaren Drehmomentübertragungseinrichtung,
- Fig. 2: einen Längsschnitt durch eine zweite Ausführungsform des erfindungsgemäßen Membrankupplungselements mit einer Membranscheibe bzw. der entsprechenden Membrankupplung;
- Fig. 3: einen Querschnitt entsprechend der in den Fig. 1 und 2 dargestellten Linie III-III durch eine erste Ausführungsvariante einer Federanordnung, welche bei den Ausführungsformen gemäß Fig. 1 und 2 vorgesehen ist;
- Fig. 4a und 4b: eine Draufsicht auf die erste Ausführungsvariante der Federanordnung, wobei Fig. 4b einen ausgelenkten Zustand dieser Federanordnung zeigt;
- Fig. 5a und 5b: eine zweite und eine dritte Variante der Federanordnung in Draufsicht;

- Fig. 6a bis 6c: eine vierte Variante der Federanordnung, wobei Fig. 6a einen Längsschnitt, Fig. 6b eine Draufsicht und Fig. 6c einen Querschnitt darstellen;
- Fig. 7a und 7b: eine fünfte und eine sechste Variante der Federanordnung im Längsschnitt;
- Fig. 8: einen Längsschnitt durch den Verbindungsbereich zwischen Membranscheiben und zugeordneten Ringteilen in zwei Varianten;
- Fig. 9a bis 9c: eine dritte Ausführungsform des Membrankupplungselements mit zwei Membranscheiben mit einer siebten und achten Ausführungsvariante der Federanordnung, wobei Fig. 9a einen Längsschnitt, Fig. 9b einen Querschnitt entsprechend der Linie IX-IX der Fig. 9a und Fig. 9c eine Draufsicht entsprechend dem mit Y bezeichneten Pfeil der Fig. 9a darstellen;
- Fig. 10a bis 10c: eine vierte Ausführungsform des Membrankupplungselements mit zwei Membranscheiben mit einer neunten Ausführungsvariante der Federanordnung, wobei Fig. 10a einen Längsschnitt, Fig. 10b einen Querschnitt entsprechend der Linie X-X der Fig. 10a und Fig. 10c eine Draufsicht entsprechend dem mit Z bezeichneten Pfeil der Fig. 10a darstellen;
- Fig. 11a und 11b: eine vierte Ausführungsform des Membrankupplungselements mit einer darin integrierten Drehschwingungsdämpfungsanordnung eines ersten Funktionsprinzips, wobei Fig. 11a einen Längsschnitt darstellt und Fig. 11b eine Draufsicht eines Dämpfungsringteils der Drehschwingungsdämpfungsanordnung ist;
- Fig. 12: eine fünfte Ausführungsform des Membrankupplungselements auf Grundlage der Fig. 9a bis 9c, mit einer darin integrierten Drehschwingungsdämpfungsanordnung des ersten Funktionsprinzips;
- Fig. 13a bis 13c: eine sechste Ausführungsform des Membrankupplungselements mit darin integrierter Drehschwingungsdämpfungsanordnung nach einem zweiten Funktionsprinzip, wobei Fig. 13a einen Querschnitt, Fig. 13b einen Längsschnitt entsprechend der Linie Xlllb-Xlllb und Fig. 13 einen Längsschnitt gemäß der Linie XIIIc-XIIIc der Fig. 13a darstellen;
- Fig. 14: eine Drehmomentübertragungseinrichtung mit zwei erfindungsgemäßen Membrankupplungselementen der ersten Ausführungsform.

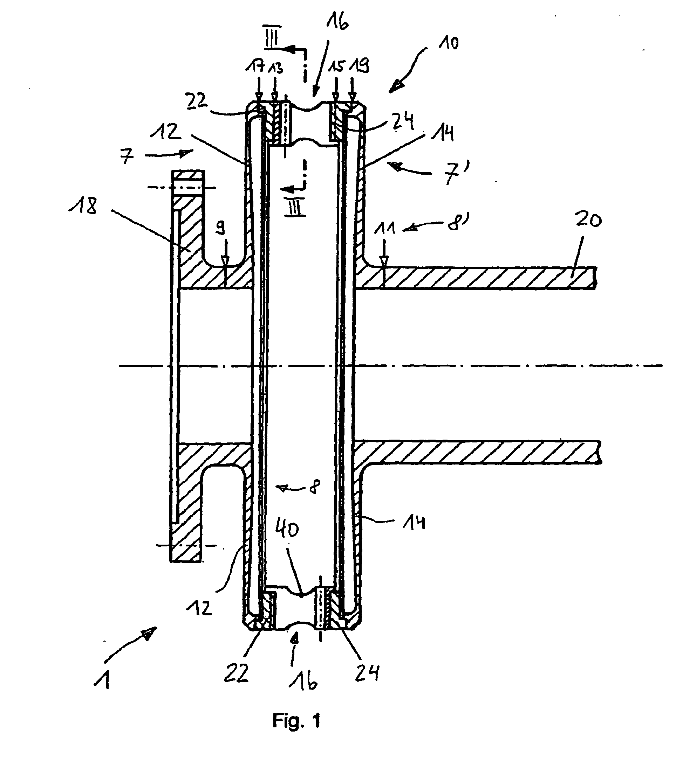

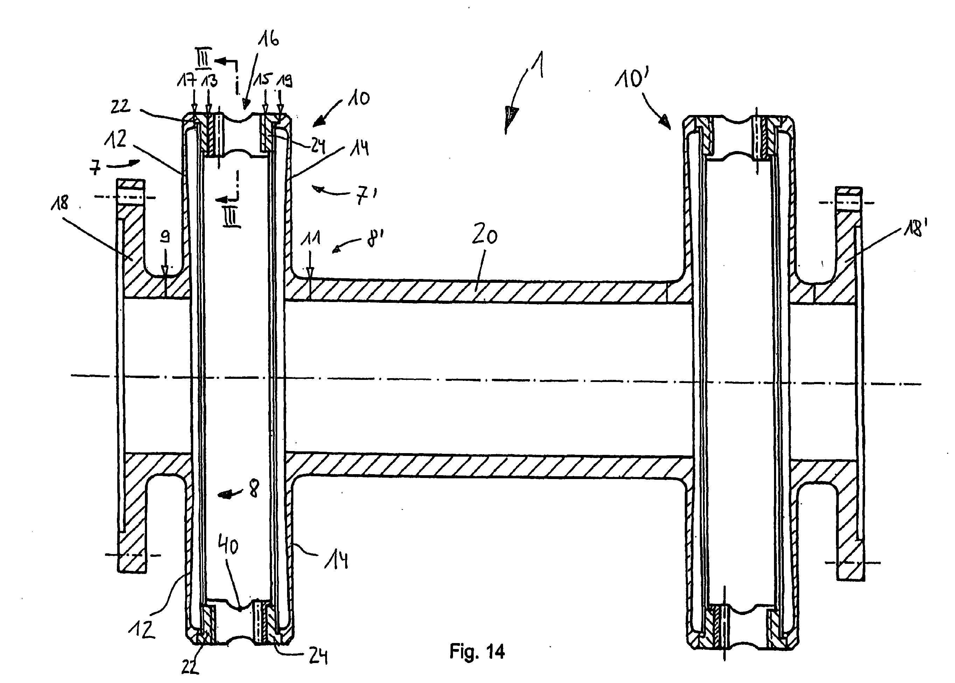

Ein in der Fig. 1 dargestelltes Membrankupplungselement 10 einer Drehmomentübertragungseinrichtung 1 weist zwei Membranscheiben 12 und 14 auf, zwischen denen in jeweiligen äußeren Umfangsbereichen 7, 7' eine Federanordnung 16 angeordnet ist. Die Membranscheibe 12 ist an einem inneren Umfangsbereich 8 mit einem Flansch 18 verbunden, welcher beispielsweise mit einer eingangsseitigen Antriebseinheit verbunden sein kann. Am inneren Umfangsbereich 8' der Membranscheibe 14 ist eine Welle 20 angeordnet, die beispielsweise mit einer ausgangsseitigen angetriebenen Einheit (Generator oder dergleichen) verbindbar ist. Durch die Anordnung eines Membrankupplungselements mit zwei Membranscheiben 12, 14, das nachfolgend auch als Doppelmembranelement bezeichnet wird, können bis auf den radialen Wellenversatz mit parallelen Wellen alle anderen Wellenversatzarten (axialer und winkliger Wellenversatz) ausgeglichen werden. Um den radialen Wellenversatz mit parallelen Wellen ausgleichen zu können, kann beispielsweise an der Welle 20 ein weiteres Doppelmembranelement 10 befestigt werden, welches dann mit der angetriebenen Einheit verbunden wird, so dass zwischen Antriebseinheit und angetriebener Einheit zwei Doppelmembranelemente vorhanden sind, welche alle Wellenversatzarten ausgleichen können. Es wird auf Fig. 14 verwiesen.

Die Federanordnung 16 ist vermittels Ringteilen 22, 24 an den äußeren Umfangsbereichen 7, 7' der jeweiligen Membranscheibe 12, 14 angebunden. Sowohl die Membranscheiben 12 und 14, als auch die Ringteile 22 und 24 sind jeweils identisch ausgebildet. Das Doppelmembranelement 10 ist am Flansch 18 bzw. an der Welle 20 vermittels Elektronenstrahlschweißung verbunden, was durch die Pfeile 9 und 11 angedeutet ist. Die Federanordnung 16 ist mit den Ringteilen 22 und 24 an den Stellen 13 und 15 elektronenstrahlverschweißt und die Ringteile 22 und 24 sind mit der jeweiligen Membranscheibe 12 bzw. 14 an den Stellen 17 und 19 vermittels Elektronenstrahlschweißung verbunden. Durch die Elektronenstrahlschweißung, welche als qualitativ sehr hochwertige stoffschlüssige Verbindungstechnik bekannt ist, wird ein hohes Maß an Betriebssicherheit erreicht. Es ist denkbar, die jeweiligen Membranscheiben 12 bzw. 14 mit dem Flansch 18 bzw. der Welle 20 einstückig herzustellen.

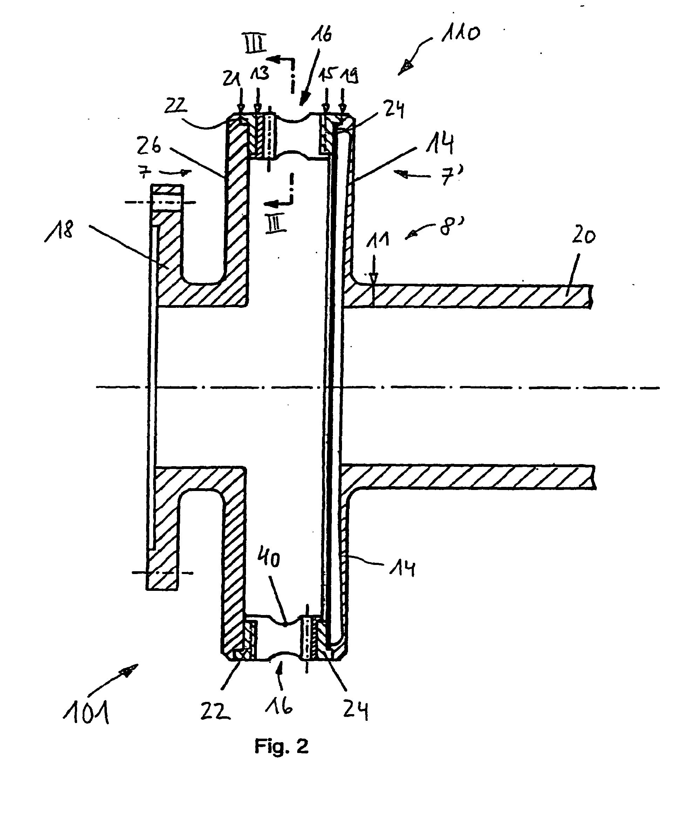

Die in Fig. 2 dargestellte zweite Ausführungsform eines Membrankupplungselements 110 einer Drehmomentübertragungseinrichtung 101 unterscheidet sich vom Membrankupplungselement 10 der ersten Ausführungsform (Fig. 1) dadurch, dass das Ringteil 22 mit einem im Wesentlichen starren Flanschabschnitt 26 verbunden ist. Das Membrankupplungselement 110 weist also nur eine Membranscheibe 14 auf, wobei die Federanordnung 16 zwischen dieser Membranscheibe 14 und dem Flanschabschnitt 26 angeordnet ist. Das Ringteil 22 ist in diesem Fall an der Stelle 21 vermittels Elektronenstrahlschweißung mit dem Flanschabschnitt 26 verbunden.

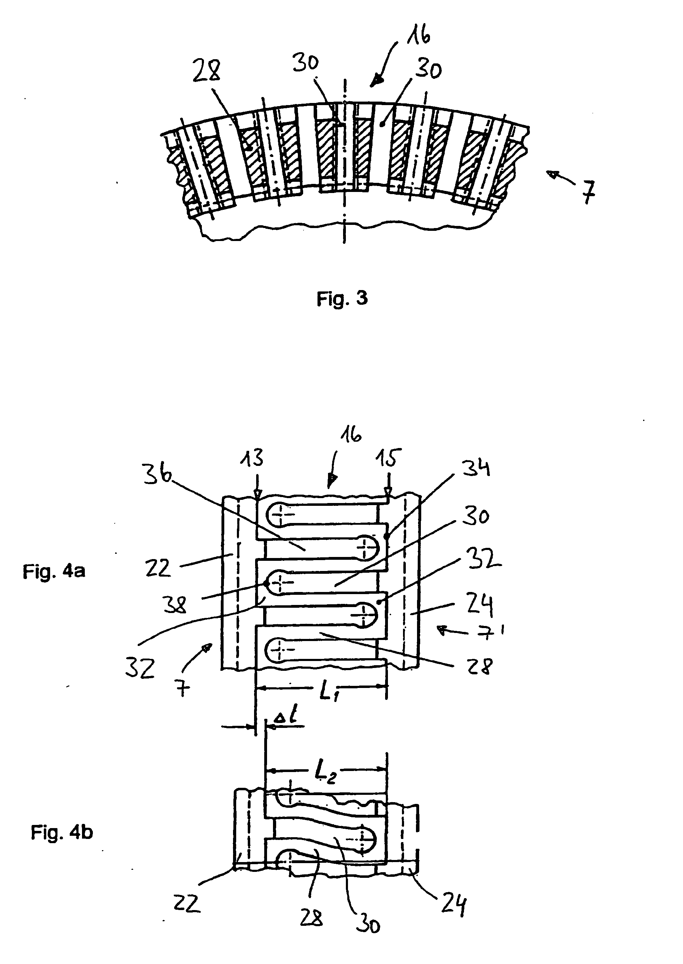

Eine erste Ausführungsvariante der Federanordnung 16 ist in den Fig. 3, 4a und 4b dargestellt. In der Querschnittsansicht der Fig. 3 sind strebenartige Federabschnitte 28 ersichtlich, die in radialer Richtung eine Höhe aufweisen, welche größer ist als ihre Tiefe in Umfangsrichtung. Zwischen den in Umfangsrichtung verteilten Federabschnitten 28 sind schlitzartige Durchbrüche 30 vorgesehen. Zwei in Umfangsrichtung benachbarte Federabschnitte 28 sind jeweils über einen Verbindungsabschnitt 32 miteinander verbunden, wobei eine Gruppe von Verbindungsabschnitten 32 mit dem Ringteil 22 und eine andere Gruppe von Verbindungsabschnitten 32 mit dem Ringteil 24 verbunden sind. In den Ringteilen 22, 24 sind Nuten 34 vorgesehen, in die die Federanordnung 16 mit ihren Verbindungsabschnitten 32 eingesetzt ist. Es wird hierdurch eine formschlüssige Drehmitnahmekopplung zwischen den Ringteilen 22, 24 einerseits und der Federanordnung 16 andererseits auch unabhängig von der Verschweißung erreicht, so dass die Schweißnähte im Betrieb weniger belastet werden. Man kann eine U-förmige Schweißnaht entsprechend den Nuten 34 zwischen den Verbindungsabschnitten 32 und den Ringteilen 22, 24 vorsehen, oder auch nur eine Verschweißung an den Nutböden, wobei ggf. der Einfachheit halber eine durchgehende Schweißnaht in Umfangsrichtung vorliegen kann. Die Federabschnitte 28 und die Verbindungsabschnitte 32 bilden bei dieser Ausführungsform der Federanordnung einen mäanderförmigen Federring, der sich entlang des äußeren Umfangsbereichs 7 zwischen den mit den Membranscheiben 12, 14 verbundenen Ringteilen 22 und 24 erstreckt. Bei der Übertragung des Drehmoments ergibt die elastische Biegeverformung der Federabschnitte 28 die zur Schwingungsminderung erforderliche Drehelastizität der Federanordnung 16. In einem Übergangsbereich zwischen den Federabschnitten 28 und den Verbindungsabschnitten 32 sind jeweilige Durchbrüche 30 abgerundet ausgeführt, beispielsweise durch eine radiale Bohrung 38, um Biegespannungsüberhöhungen in Folge von Kerbwirkung zu vermeiden. Um eine möglichst gleichmäßige Verteilung der Biegespannung über die Länge der stegartigen Federabschnitte 28 zu erreichen, weisen die radialen inneren und äußeren Oberflächen der Federabschnitte 28 speziell geformte Ausdrehungen 40 (Taillierung) auf, wie dies beispielsweise in den Fig. 1 und 2 klar ersichtlich ist. Solche Ausdrehungen 40 weisen den Vorteil auf, dass sie neben einer gleichmäßigen Biegespannungsverteilung auch das Gewicht und das Massenträgheitsmoment des Membrankupplungselements bzw. der Membrankupplungsvorrichtung verringern.

In Fig. 4b ist die Federanordnung 16 unter der Belastung durch die Umfangskräfte eines vermittels des Membrankupplungselements zu übertragenden Drehmoments dargestellt. Im Vergleich mit Fig. 4a (unbelasteter Zustand) ergibt die elastische Verformung der stegartigen Federabschnitte 28 eine Verkleinerung der Länge von L₁ auf L₂. Durch diese Verkleinerung Δl wird jede der beiden Membranen 12, 14 (Fig. 1) in ihrem äußeren Umfangsbereich mit den Ringteilen 22, 24 um den halben Betrag Δl in Richtung der Federanordnung 16 (nach innen) gezogen. Die hochelastische Ausbildung der Membranscheiben 12, 14 führt dazu, dass bei deren Biegeverformung in vorteilhafter Weise sehr kleine Rückstellkräfte entstehen, welche die angebauten Maschinen (Antriebseinheit, angetriebene Einheit) nur unbedeutend belasten.

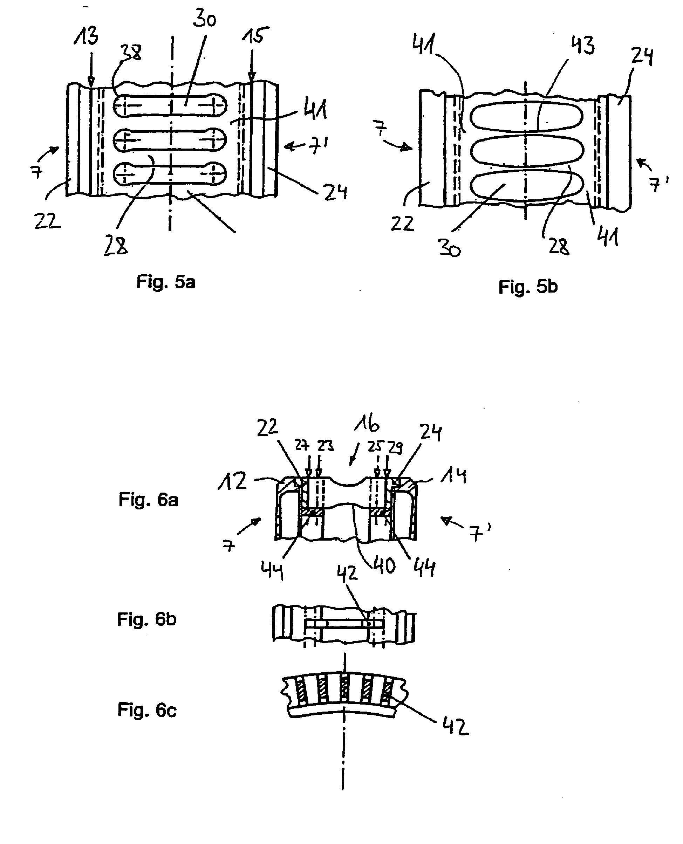

In den Fig. 5a und 5b sind eine zweite und dritte Ausführungsvariante der Federanordnung 16 dargestellt, bei denen die stegartigen Federabschnitte 28 auf beiden Seiten mit Verbindungsringabschnitten 41 verbunden sind, welche jeweils alle Federabschnitte 28 miteinander verbinden. Benachbarte Federabschnitte 28 und die beiden Verbindungsringabschnitte 41 begrenzen jeweils einen Durchbruch 30, bei dem wie bereits in Fig. 4a erläutert, zur gleichmäßigen Verteilung der Biegespannungen Abrundungen bzw. Bohrungen 38 vorgesehen sind. In der dritten Ausführungsvariante (Fig. 5b) weisen die Federabschnitte 28 eine Taillierung 43 in Umfangsrichtung auf, so dass die jeweiligen Federabschnitte 28 in einem axial mittleren Bereich am schmalsten ausgeführt sind. Die derart durch die Federabschnitte 28 und die Verbindungsringabschnitte 41 gebildeten Durchbrüche 30 der Federanordnung 16 stellen eine Form dar, mit der eine mögliche größte Einfederung bei kleinstem Gewicht erreicht werden kann. Die Bestimmung einer solchen Form erfolgt unter der Rechenbedingung, dass die Biegespannungen entlang der Länge der Durchbrüche 30 gleich groß sind. Es ist anzumerken, dass durch die Variation der radialen Höhe bzw. der Tiefe in Umfangsrichtung der Federabschnitte 28 generell die Flexibilität der Federanordnung 16 beeinflussbar ist. Selbstverständlich ist es auch denkbar, dass eine Taillierung 43 in Umfangsrichtung gemäß Fig. 5b und eine Taillierung 40 in Radialrichtung gemäß Fig. 1 und 2 ggf. kombiniert werden können. Die in den Fig. 4a, 5a und 5b dargestellten Federanordnungen 16 sind jeweils als Federring ausgebildet, bei dem die Durchbrüche 30 aus einem Federringrohling beispielsweise durch Fräsen, vorzugsweise durch Funkenerosion, herausgearbeitet sind. Die Federanordnungen der Fig. 5a und 5b könnten an Stelle der Federanordnung gemäß Fig. 3, 4a und 4b bei einem Membrankupplungselement bzw. einer Membrankupplung entsprechend Fig. 1 oder entsprechend Fig. 2 vorgesehen sein.

In den Fig. 6a bis 6c ist eine vierte Variante der Federanordnung 16 dargestellt, wobei die Federanordnung 16 durch voneinander gesonderte Federelemente 42 gebildet wird. Solche Federelemente 42 können als Federstege, Federstäbe oder als Federblätter ausgeführt sein. Um die Montage zu vereinfachen, sind radial innen an den äußeren Umfangsbereichen 7, 7' der Membranscheiben 12, 14 Zwischenringe 44 angeordnet. Die Federelemente 42, welche beispielsweise als rechteckige Bleche aus hochfestem Stahl ausgebildet sind, sind in radiale Nuten der Ringteile 22, 24 eingefügt und mittels Elektronenstrahlschweißungstellen 23, 25, 27, 29 befestigt. Anstelle von massiven Blechen für die Federelemente 42 können auch mehrschichtige Bleche verwendet werden. Für die gleichmäßige Biegespannungsverteilung sind auch die Federelemente 42 mit radialen Taillierungen 40 ausgebildet.

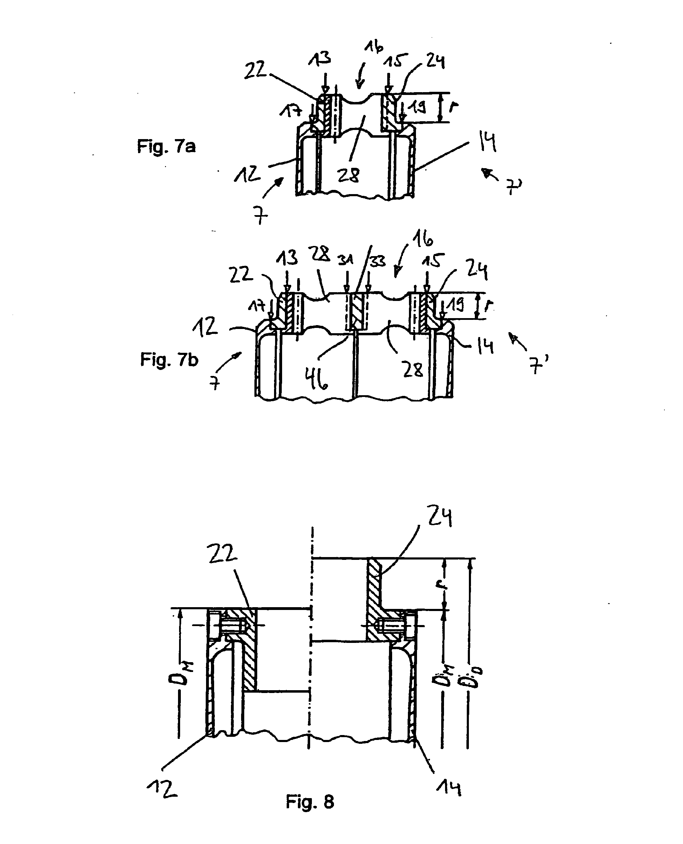

In den Fig. 7a und 7b sind eine fünfte und sechste Ausführungsvariante der Federanordnung 16 dargestellt, welche sich zusammen mit den Ringteilen 22, 24 vom äußeren Umfangsbereich der Membranscheiben 12, 14 radial weiter nach außen erstrecken. Diese Art der Anflanschung der Ringteile 22, 24 und der Federanordnung 16 ermöglichen eine Vergrößerung der Federanordnung 16 in radialer Richtung beispielsweise um das Maß r. Durch eine solche Vergrößerung der Federanordnung 16 sind an dieser bezogen auf eine gegebene Federspannung größere Drehverformungen möglich. Um die Drehverformbarkeit weiter zu vergrößern, wird gemäß der sechsten Ausführungsvariante (Fig. 7b) eine Federanordnung 16 verwendet, bei der zwei Gruppen von Federabschnitten 28 unter Abstützung an einem Zwischenring 46 in axialer Richtung hintereinander angeordnet sind. Der Zwischenring 46 ist mit den beiden Federabschnitten 28 an den Stellen 31 und 33 elektronenstrahlverschweißt.

In Fig. 8 ist eine mögliche lösbare Befestigung der Ringteile 22, 24 bzw. der Federanordnung an den Membranen 12, 14 mittels Schraubbolzen 48 dargestellt. Selbstverständlich kann auch hier die Anflanschung ähnlich zu den Fig. 1 und 7a wahlweise innerhalb des Membrandurchmessers D_{M} oder außerhalb des Membrandurchmessers D_{M} erfolgen. Der gesamte Durchmesser D_{D} eines Membrankupplungselements ergibt sich gemäß Fig. 8 aus der Addition des Membrandurchmessers D_{M} mit dem Vergrößerungsmaß r der Federanordnung.

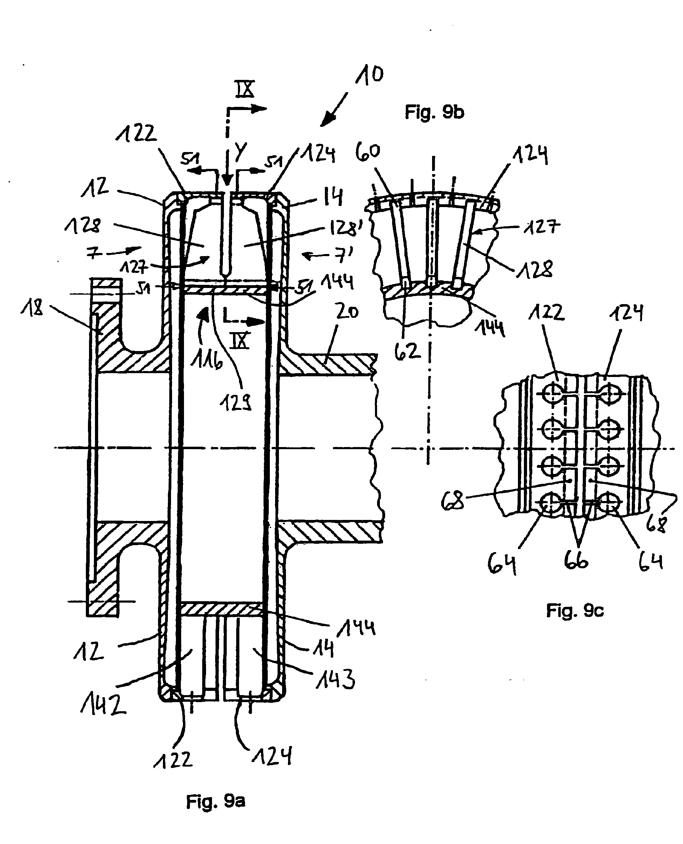

In den Fig. 9a, 9b und 9c ist eine dritte Ausführungsform des Membrankupplungselements mit einer Federanordnung 116 (siebte Ausführungsvariante) dargestellt, welche zwischen den Membranscheiben 12 und 14 des Membrankupplungselements 10 angeordnet ist. Das Membrankupplungselement 10 weist in dieser Ausführungsform in Analogie zu den bisher beschriebenen Ausführungsformen zwei Ringteile 122, 124 auf, an denen die Federanordnung 116 vermittels Elektronenstrahlschweißung angebracht ist. Ferner umfasst das Membrankupplungselement 10 einen konzentrisch zu den Ringteilen 122, 124 radial innen angeordneten Zwischenring 144. Die Federanordnung 116 weist eine Vielzahl mit ihren radial äußeren und radial inneren Enden mit den Ringteilen 122 bzw. 124 und dem Zwischenring 144 axial und radial starr verbundene Blattfedern 127 auf, die von einem Basisabschnitt 129 und zwei einteilig damit zusammenhängenden Blattfederabschnitten 128, 128' gebildet sind. Die Federabschnitte 128 sind mit einem axial durchgehenden Basisabschnitt 129 an dem Zwischenring 144 angebracht, nämlich festgeschweißt, wobei sich der Basisabschnitt 129 in eine jeweilige Axialnut 62 des Zwischenrings 144 erstrecken kann, wie in Fig. 9b zu erkennen. An den Basisabschnitt 129 schließen sich zwei axial gegeneinander versetzte Blattfederabschnitte 128, 128' an, die am Ringteil 122 bzw. am Ringteil 124 angebracht, nämlich elektronenstrahlverschweißt, sind und sich dabei ausweislich Fig. 9b ebenfalls in eine jeweilige Axialnut 60 des betreffenden Ringteils 122, 124 erstrecken können. Die Drehmomentübertragungsverbindung zwischen den Membranscheiben 12 und 14 verläuft also über das Ringteil 122, den einen Blattfederabschnitt 128, den Basisabschnitt 129 der Blattfeder 127, den anderen Blattfederabschnitt 128', und das andere Ringteil 124. Bei Übertragung des Drehmoments ergibt die elastische Biegeverformung in Umfangsrichtung der Federabschnitte 128, 128' die zur Schwingungsminderung erforderliche Drehelastizität. Die Drehelastizität des gesamten Doppelmembranelements 10 ergibt sich aus der Anordnung der Federabschnitte 128, 128' durch Addition der in den beiden Radialebenen vorhandenen Drehelastizitäten (Verdoppelung). Die beiden Ringteile 122 und 124 sind mittels Elektronenstrahl-Schweißung mit den Membranscheiben 12, 14 starr verbunden. Am Innenumfang der Ringteile 122 und 124 und am Außenumfang des Zwischenrings 144 sind, wie schon angesprochen, eine den Federabschnitten 128, 128' entsprechende Anzahl von Axial- oder Längsnuten 60, 62 für eine formschlüssige Kopplung vorgesehen (Fig. 9b). Für die axial und radial starre Befestigung der Federabschnitte 128, 128' an den Ringteilen 122 und 124 und dem Zwischenring 144 sind zusätzlich an deren axial äußeren und inneren Endbereichen Elektronenstrahl-Schweißungen 51 vorgesehen. An den Ringteilen 122 und 124 sind außerdem jeweils mittig zwischen den Federabschnitten 128 radiale Bohrungen 64 und Längsschlitze 66 angebracht. Hierdurch ergeben sich radialelastische Zungen- bzw. Ringabschnitte 68. Das mögliche radiale Nachgeben der Ringabschnitte 68 reduziert an den Federabschnitten 128 und an den Schweißnähten die in Folge der bogenförmigen Biegung der Federabschnitte 128 und deren dabei entstehenden Verkürzung ihrer radialen Länge auftretenden Zugbeanspruchungen. Hierdurch werden örtliche Überlastungen vermieden und es können höhere Drehmomente übertragen werden.

In der unteren Hälfte der Fig. 9a ist eine Ausführungsvariante angedeutet, bei der an Stelle der zwei einteilig zusammenhängende Blattfederabschnitte 128 aufweisenden Blattfedern zwei axial gegeneinander versetzte Blattfedern 142 und 143 vorgesehen sind, die jeweils einerseits mit dem Zwischenring 144 durch Elektronenstrahlschweißen stoffschlüssig verbunden sind und andererseits mit einem jeweiligen der Ringteile 122 und 124 durch Elektronenstrahlschweißen stoffschlüssig verbunden sind. Die Drehmomentübertragungsverbindung zwischen den Membranscheiben 12 und 14 verläuft also über das eine Ringteil 122, die Blattfedern 142, den Zwischenring 144, die anderen Blattfedern 143 und das andere Ringteil 124.

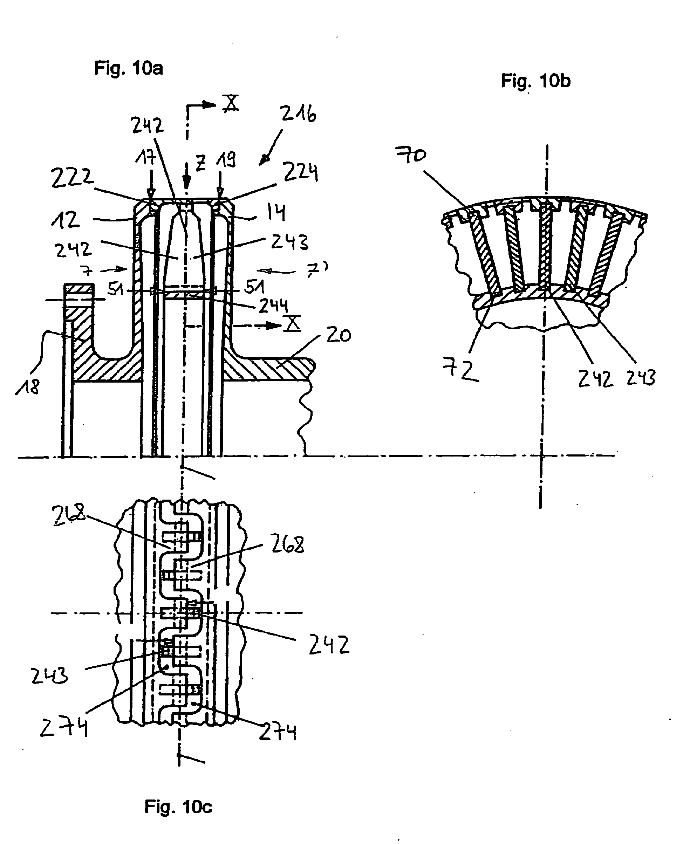

Eine vierte Ausführungsform des Membrankupplungselements mit einer neunten Ausführungsvariante der Federanordnung 216 ist in den Fig. 10a, 10b und 10c dargestellt. Die Federanordnung 216 weist hintereinander angeordnete gesonderte Blattfederelemente 242 und 243 auf. Diese sind hintereinander in einer gemeinsamen Radialebene wechselseitig an zwei identische Außenringe 222, 224 und einen hierzu konzentrischen Zwischenring 244 mit ihren radial äußeren und radial inneren Enden formschlüssig über Längsnuten 70, 72 sowie zusätzlich mittels Elektronenstrahl-Schweißung (Pfeile 51) axial und radial starr verbunden. Der Anschluss der Federanordnung 216 an die Membranscheiben 12, 14 erfolgt in aus den vorhergehenden Ausführungsbeispielen bekannter Weise mittels Elektronenstrahl-Schweißung zwischen den Ringteilen 222 bzw. 224 und den Membranscheiben 12 bzw. 14, wie durch die Pfeile 17 und 19 angezeigt. Die Federelemente 142 und 143 unterscheiden sich voneinander vor allem dadurch, dass die Federelemente 142 mit dem Ringteil 122 und die Federelemente 143 mit dem Ringteil 224 verbunden sind, wobei sich in Umfangsrichtung die Blattfederelemente 242 und Blattfederelemente 243 gegenseitig abwechseln. Zur Verbindung mit den Federelementen 242 weist das Ringteil 222 axial vorstehende Zungenabschnitte 268 auf, die zwischen entsprechenden axial vorstehende Zungenabschnitte 268 des Ringteils 242 eingreifen. Die auch als Ringabschnitte 268 angesprochenen Zungenabschnitte greifen also jeweils in eine Aussparung oder Ausnehmung 274 zwischen zwei Zungenabschnitten bzw. Ringabschnitten 268 des jeweils anderen Ringteils ein. Diese Ausgestaltung ermöglicht es, dass die Federelemente 242 und 243 in einer gemeinsamen Radialebene angeordnet sind. Durch das verzahnungsartige Ineinandergreifen der beiden Ringteile 222, 224 mit ihren Zungenabschnitten 268 und dazwischen gebildeten Ausnehmungen 274 oder Aussparungen mit durch die Ausdehnung der angesprochenen Komponenten in Umfangsrichtung definiertem Drehspiel kann überdies eine definierte Begrenzung des Relativdrehwinkels zwischen den beiden Membranscheiben 12 und 14 erreicht werden.

Durch die radiale Elastizität der Ringabschnitte 268 wird ein Radialausgleich bereitgestellt, der die Verkürzung der Radialerstreckung der Blattfederelemente 242 und 243 bei deren elastischen Biegeverformung und entsprechender Relatiwerdrehung zwischen den Membranscheiben 12, 14 durch das wirkende Drehmoment bzw. den wirkenden Drehmomentstoß ausgleicht, mit entsprechender Reduzierung der in den Federelementen 242, 243 und in den durch Elektronikverschweißung ausgebildeten Schweißnähten auftretenden Zugspannungen. Die Ringabschnitte 268 haben also die gleiche Funktion wie die zungenartigen Ringabschnitte 68 beim Ausführungsbeispiel der Fig. 9a bis 9c. Die Höhe der Gesamtdrehelastizität des Membrankupplungselements 10 mit einer Federanordnung gemäß Ausführungsform der Fig. 10a bis 10c ergibt sich durch Addition der jeweiligen Drehelastizität der Federerlemente 242 und 243.

Alle bis hier in den Fig. 1 bis 10 vorgestellten, eine Federanordnung aufweisenden erfindungsgemäßen Membrankupplungselemente sind dazu in der Lage, axiale und/oder radiale und/oder winklige Wellenversätze auszugleichen und insbesondere Wellendrehschwingungen sowie stoßartige Belastungen stark zu reduzieren bzw. zu dämpfen, ohne dass Rückstellkräfte die angebauten Antriebseinheiten bzw. angetriebenen Einheiten wesentlich belasten. Solche Membrankupplungselemente mit Federanordnung eignen sich für unterschiedliche Drehzahlbereiche, insbesondere auch für relativ hohe Drehzahlen mit einer Umfangsgeschwindigkeit beispielsweise bis etwa 300 m/s.

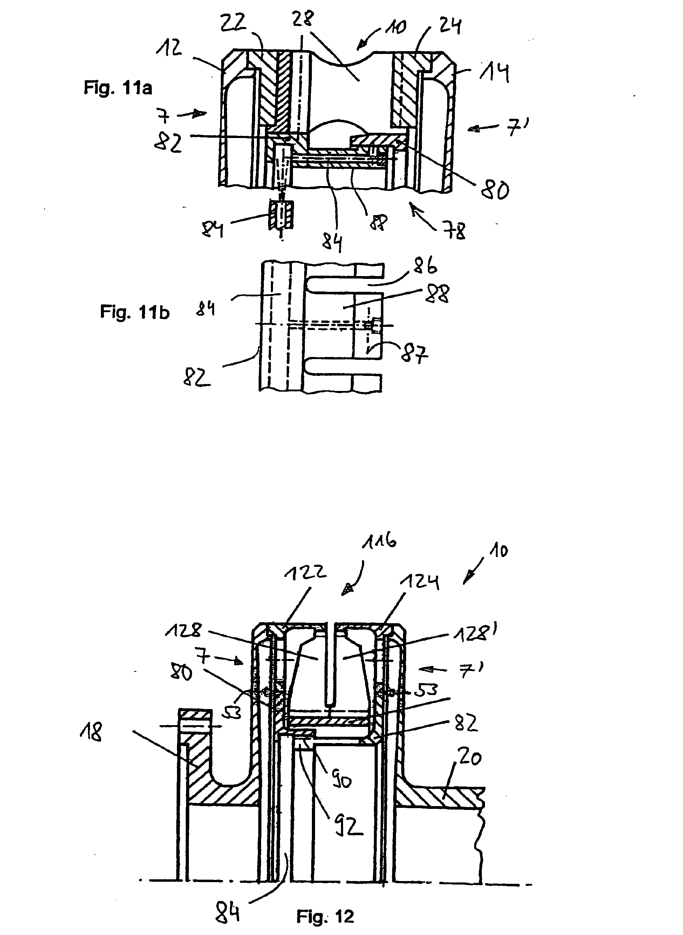

In den Fig. 11a und 11b ist eine vierte Ausführungsform des Membrankupplungselements mit einer darin integrierten Drehschwingungsdämpfungsanordnung 78 eines ersten Funktionsprinzips dargestellt, welche eine Dämpfungswirkung durch äußere Reibung bewirkt. In das Membrankupplungselement 10 sind eingebaut ein äußeres Dämpfungsringteil 80 sowie ein inneres Dämpfungsringteil 82 mit Bohrungen 84 für die Zuführung von Schmiermittel. Außerdem weist das innere Dämpfungsringteil 82 mehrere durch axiale Schlitze 86 gebildete, radialelastische Ringabschnitte 88 auf, die sich unter Fliehkraft stärker aufweiten als das äußere Dämpfungsringteil 80. Die Dämpfungswirkung beruht auf dem Prinzip, Schwingungsenergie durch Bewegungsreibung zu entziehen. Letztere wird erzeugt durch die Relativbewegungen zwischen dem äußeren Dämpfungsringteil 80, welches mit dem Ringteil 24 bzw. der Membranscheibe 14 drehfest verbunden ist und dem inneren Dämpfungsringteil 82, welches mit dem Ringteil 22 bzw. der Membranscheibe 12 verbunden ist, in Folge der elastischen Biegeverformungen der Federeinheit 16 bei einem anliegenden Drehmoment bzw. Drehmomentstoß. Die erforderliche radiale Anpresskraft der radialelastischen Ringabschnitte 88 bzw. einer Reibfläche 87 derselben ergibt sich aus den Fliehkräften, wobei die Größe der Kräfte unter anderem durch die jeweilige Drehzahl mitbestimmt wird. Durch die größere Aufweitung der Ringabschnitte 88 unter Fliehkrafteinfluss wird sichergestellt, dass diese sich ständig, d. h. auch bei Verschleiß, am äußeren Dämpfungsringteil 88 anpressen. Die Entstehung von Verschleiß kann unter anderem durch Härten der Reibflächen, Schmiermittel oder eine Schutzschicht (Chrom, Keramik) verhindert bzw. reduziert werden.

In Fig. 12 ist eine fünfte Ausführungsform des Membrankupplungselements 10 mit der Federanordnung 116 gemäß Fig. 9a bis 9c und einer Drehschwingungsdämpungsanordnung des ersten Funktionsprinzips illustriert. Auch hier sind das äußere Dämpfungsringteil 80 und das innere Dämpfungsringteil 82 an die Membranscheibe 12 bzw. 14 angeschweißt bei 53. Die Schmiermittelzuführung an Reibflächen der Dämpfungsringteile 80, 82 erfolgt durch mehrere Öltaschen 90. Eine Erhöhung der Fliehkraft der axial geschlitzten Ringabschnitte 88, und damit auch der Reibung, kann durch eine Zusatzmasse 92 erreicht werden, welche am inneren Dämpfungsringteil 82 angeordnet bzw. Teil des inneren Dämpfungsringteils 82 ist. Mit 84 ist eine Schmiermittelzuführung bezeichnet, durch welche Schmiermittel in die Öltaschen 90 zugeführt wird.

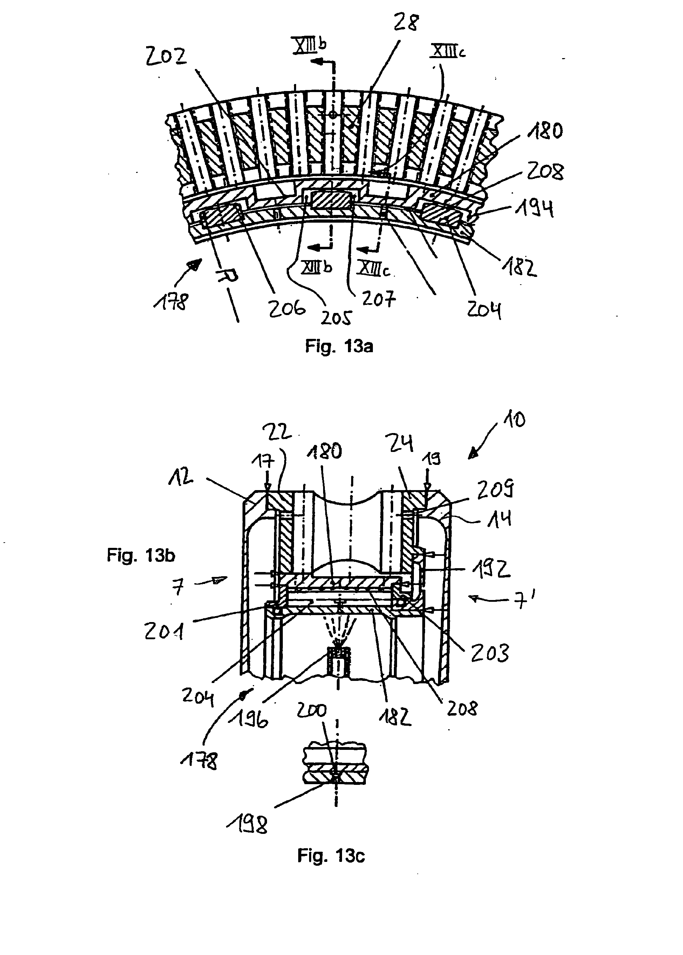

In den Fig. 13a, 13b und 13c ist als Alternative zur allein auf Reibung (erstes Funktionsprinzip) beruhenden Drehschwingungsdämpfungsanordnung der Fig. 11a, 11b und 12 ein Flüssigkeitsdämpfer 178 einer sechsten Ausführungsform des Membrankupplungselements 10 dargestellt. Am Ringteil 22 ist ein äußeres Dämpfungsringteil 180 angebracht, und ein Ringteil 24 ist mittels eines Zwischenflansches 194 mit einem inneren Dämpfungsringteil 182 verbunden. Auf der radial innen liegenden Seite des äußeren Dämpfungsringteils 180 befinden sich eine wählbare Anzahl (im Beispiel vierundzwanzig) von Längsnuten 194, die als Kammern dienen, für das von innen über eine Flüssigkeits- bzw. Öleinspritzung 196, Bohrungen 198 und einen Ringkanal 200 (Fig. 13c) zufließende Öl. Die an der radialen Außenseite des äußeren Dämfpungsringteils 180 vorgesehenen Längsnuten 202 dienen ausschließlich zur Gewichtsminimierung. An der Außenseite des inneren Dämpfungsringteils 182 sind mittig zu den Längsnuten 194, ebenfalls in Längsnuten als Unterteilungselement wirkende Ölverdränger 204 angeordnet. Ihre Befestigung in den Nuten kann radial beweglich oder starr, beispielsweise durch Schrauben, erfolgen. Die bewegliche Anordnung der Ölverdränger 204 ermöglicht durch die Fliehkraft der Ölverdränger 204 vorteilhaft deren selbsttätige, öldichte Anpressung an die demgegenüber radial außen liegenden Bodenflächen der Längsnuten 194. Durch Auswahl des Gewichts der Ölverdränger 204 kann die bezogen auf eine gegebene Antriebsdrehzahl resultierende Fliehkraft eingestellt werden. Die den Längsnuten 194 zugewandte Außenfläche 206 der Verdränger 204 ist vorzugsweise bogenförmig, z. B. mit dem Radius R, ausgebildet (Fig. 13a). Der Radius R kann gleich oder kleiner als der Abstand der Außenfläche 206 zur Kupplungsachse sein. An der Außenfläche 206 befinden sich ferner eine wählbare Anzahl in Umfangsrichtung weisende und tangential zum Radius R angeordnete Schlitze 208, die als Drosselwege bei der Ölverdrängung fungieren. Die Querschnittsgröße und die Länge der Schlitze 208 sind abhängig von der gewünschten Dämpfer-Kennung, wie etwa lineare oder progressive Dämpfung. Die Abstände der Ölverdränger 204 in Umfangsrichtung zu den Seitenflächen der Längsnuten 194 können gleich oder größer als die in eine jeweilige Drehrichtung zu erwartenden maximal zulässigen Einfederungen der Federeinheit 16, und damit auch der Ölverdränger 204, ausgeführt werden. Wählt man den Abstand gleich groß, wirken die Ölverdränger 204 als Anschlag für die Wegbegrenzung. Hierdurch werden einerseits Überbelastungen der Federanordnung 16 vermieden und andererseits wird die drehstarre Übertragung noch größerer Drehmomente ermöglicht. An den axialen Enden des äußeren und des inneren Dämpfungsringteils 180, 182 befinden sich zu deren Abdichtung an das äußere Dämpfungsringteil 180 angeschweißte Abschlussdeckel 201, 203 mit O-Ringen als Dichtung.

Das Funktionsprinzip des Flüssigkeitsdämpfers 178 wird im Folgenden erläutert. Zwei konzentrisch angeordnete Dämpfungsringteile 180, 182 sind mit der Federanordnung 16 an je einer Seite (Ringteil 22 bzw. Ringteil 24) starr verbunden. Die Belastung durch das Drehmoment bzw. Drehmomentstöße erzeugt an der Federanordnung 16 Dreheinfederungen, welche die beiden Dämpfungsringteile 180, 182 relativ zueinander oszillationsartig verdrehen. Die von innen vorgesehene Öleinspritzung 196 bewirkt, dass beiderseits der Ölverdränger 204 mit den Längsnuten 194 gebildete Kammern 205, 207 vollständig mit Öl gefüllt werden. Verstärkt wird die radiale Ölzufuhr durch die im Öl entstehenden Fliehkräfte. Mit größer werdender Drehzahl erhöht sich der Öldruck in den Kammern 205 207, so dass diese ständig gefüllt sind. Für den Ablauf des nachfließenden Öls dienen im äußeren Bereich der Federanordnung 16 an den Durchbrüchen 30 angebrachte Ablaufbohrungen 209. Bei den Relativbewegungen von äußerem und innerem Dämpfungsringteil 180, 182 erfolgt durch die Ölverdränger 204, je nach Drehrichtung, eine Verkleinerung bzw. Vergrößerung der Ölkammern 205, 207. Bei der sich verkleinernden Kammer (z. B. 214) ergibt sich durch Ölquetschung gegenüber dem statischen Druck ein Überdruck, der zur Folge hat, dass über die Drosselschlitze 208 eine Ölverdrängung in die sich vergrößernde Kammer (z. B. 216) stattfindet. Diese gedrosselt stattfindende Ölverdrängung bremst die Relativbewegung des äußeren und des inneren Dämpfungsringteils 180, 182 und dämpft dadurch die Drehschwingungen. Eine weitere Dämpfung entsteht durch Reibung, die sich durch das Anpressen der Ölverdränger 204 an die Längsnut 194 aufgrund der wirkenden Fliehkräfte ergibt.

Die Anordnung von Drehschwingungsdämpfern im Innenraum des Membrankupplungselements mit einer Federanordnung und die kompakte Konstruktion führen dazu, dass trotz integriertem Drehschwingungsdämpfer die Kupplungsgröße, wie etwa Durchmesser und axiale Länge, sich nicht verändert im Vergleich mit einem Membrankupplungselement ohne Drehschwingungsdämpfer.

In Fig. 14 ist eine Drehmomentübertragungseinrichtung 1 mit zwei erfindungsgemäßen Membrankupplungselementen 10, 10' der ersten Ausführungsform dargestellt. Hierbei sind die beiden Membrankupplungselemente 10, 10' über eine Anschlusswelle 20 miteinander vebunden. Die Drehmomentübertragungseinrichtung wird eingangsseitig beispielsweise am Flansch 18 und ausgangsseitig beispielsweise am Flansch 18' an entsprechenden Antriebseinheiten bzw. angetriebenen Einheiten angeschlossen. Wie bereits erwähnt, ist eine solche Drehmomentübertragungseinheit 1 mit zwei erfindungsgemäßen Membrankupplungselementen 10, 10' in der Lage, alle Wellenversatzarten (axial, radial und winklig) auszugleichen und insbesondere Wellendrehschwingungen sowie stoßartige Belastungen stark zu reduzieren bzw. zu dämpfen, ohne dass Rückstellkräfte die angebauten Antriebseinheiten bzw. angetriebenen Einheiten wesentlich belasten. Es ist auch denkbar, dass eine Drehmomentübertragungseinrichtung zwei Membrankupplungselemente nach einer der anderen Ausführungsformen (vgl. Fig. 2 bis 13c) umfasst oder dass mehr als zwei Membrankupplungselemente in die Drehmomentübertragungseinrichtung integriert sind.

## Patentansprüche

1. Membrankupplungselement (10) einer Drehmomentübertragungseinrichtung (1), umfassend eine Gruppe aus wenigstens zwei biegeelastischen Membranscheiben (12, 14), die jeweils einen radial äußeren und einen radial inneren Umfangsbereich (7, 7', 8, 8') aufweisen und an paarweise einander zugeordneten ihrer Umfangsbereiche miteinander in Drehmomentübertragungsverbindung stehen und über die ein Drehmomentübertragungspfad zwischen einer Eingangsseite und einer Ausgangsseite des Membrankupplungselements (10) verläuft,
wobei wenigstens eine, die Drehmomentübertragungsverbindung zwischen zwei der Membranscheiben (12, 14) herstellende und damit im Drehmomentübertragungspfad liegende, dem Membrankupplungselement (10) eine Drehelastizität verleihende, an den Membranscheiben (12, 14) angebrachte Federanordnung (16; 116; 216) vorgesehen ist, die an den paarweise einander zugeordneten, radial äußeren Umfangsbereichen (7, 7') dieser beiden Membranscheiben (12, 14) zugfest angebunden ist und sich in Umfangsrichtung entlang diesen verteilt erstreckt, **dadurch gekennzeichnet, dass**
die Federanordnung (16; 116) in Umfangsrichtung entlang wenigstens einem der Umfangsbereiche (7, 7') verteilt angeordnete Federabschnitte (28; 128, 128') aufweist und wobei die Federanordnung. (16) wenigstens eine Gruppe von entlang dem Umfangsbereich (7, 7') verteilt angeordneten, jeweils wenigstens zwei in Umfangsrichtung benachbarte Federabschnitte (28; 128, 128') miteinander verbindenden Verbindungsabschnitten (32; 122, 124) oder wenigstens einen alle Federabschnitte (28; 128, 128') miteinander verbindenden Verbindungsringabschnitt (41; 144; 244) aufweist.

2. Membrankupplungselement nach Anspruch 1, **dadurch gekennzeichnet, dass** die Federanordnung (16; 116; 216) vermittels eines gesonderten, die Federanordnung (16; 116; 216) haltenden Ringteils (22; 122; 222; 24; 124; 224) am Umfangsbereich (7, 7') angebunden ist.

3. Membrankupplungselement nach Anspruch 1 oder 2, **dadurch gekennzeichnet, dass** die Federanordnung (16; 116; 216) oder/und das Ringteil (22; 122: 222; 24; 124; 224) einen am Umfangsbereich (7, 7') der Membranscheiben (12, 14) angeordneten Umfang des Membrankupplungselements (10; 110) bildet.

4. Membrankupplungselement nach einem der vorhergehenden Ansprüche, **dadurch gekennzeichnet, dass** die Federanordnung (16; 116; 216) in Bezug auf axial wirkende Kräfte steifer, vorzugsweise wesentlich steifer als die Membranscheiben (12, 14) ausgeführt ist.

5. Membrankupplungselement nach einem der vorhergehenden Ansprüche, **dadurch gekennzeichnet, dass** die Federanordnung (16; 116; 216) in Bezug auf radial wirkende Kräfte steifer, vorzugsweise wesentlich steifer als die Membranscheiben (12, 14) ausgeführt ist.

6. Membrankupplungselement nach einem der vorhergehenden Ansprüche, **dadurch gekennzeichnet, dass** die Federanordnung (16) an ihrem Verbindungsringabschnitt (41) bzw. an ihren Verbindungsabschnitten (32) am Umfangsbereich (7, 7') angebunden ist, ggf. vermittels des Ringteils (22, 24).

7. Membrankupplungselement nach einem der vorhergehenden Ansprüche, **dadurch gekennzeichnet, dass** die Federanordnung (16; 116; 216) in Umfangsrichtung verteilt angeordnete, in Umfangsrichtung biegeelastische Federelemente (28; 128, 128'; 42; 142, 143; 242, 243) aufweist, die vorzugsweise als Federstege, Federstäbe oder Federblätter aufgeführt sind.

8. Membrankupplungselement nach Anspruch 7 sowie nach einem der vorhergehenden Ansprüche, **dadurch gekennzeichnet, dass** die Federelemente (42; 142, 143; 242, 243) die Federabschnitte (28; 128 128') bilden.

9. Membranfederkupplungselement nach Anspruch 7, **dadurch gekennzeichnet, dass** die Federelemente voneinander gesonderte Federelemente (42; 142, 143; 242, 243) sind.

10. Membrankupplungselement nach einem der Ansprüche 7 bis 9, **dadurch gekennzeichnet, dass** die Federelemente (28; 42; 128, 128 ; 142, 143; 242, 243) zumindest teilweise einen axialen Abstand zwischen den einander paarweise zugeordneten Umfangsbereichen (7, 7') überbrücken.

11. Membrankupplungselement nach einem der Ansprüche 7 bis 10, **dadurch gekennzeichnet, dass** Federelemente (28) einer ersten Gruppe zumindest teilweise einen axialen Abstand zwischen dem einen (7) der einander paarweise zugeordneten Umfangsbereichen und einem Zwischenring (46) der Federanordnung überbrücken und dass Federelemente (28) einer zweiten Gruppe zumindest teilweise einen axialen Abstand zwischen dem anderen (7') der einander paarweise zugeordneten Umfangsbereichen und dem oder einem weiteren Zwischenring der Federanordnung (16) überbrücken.

12. Membrankupplungselement nach einem der Ansprüche 7 bis 11, **dadurch gekennzeichnet, dass** die Federelemente (127, 128, 128') zumindest teilweise einen radialen Abstand zwischen den einander paarweise zugeordneten Umfangsbereichen (7, 7') überbrücken oder/und dass die Federelemente (142, 143) zumindest teilweise einen radialen Abstand zwischen dem einen (7) der einander paarweise zugeordneten Umfangsbereichen und einem Zwischenring (144) der Federanordnung sowie zumindest teilweise einen radialen Abstand zwischen dem anderen (7') der einander paarweise zugeordneten Umfangsbereichen und dem Zwischenring (144) überbrücken.

13. Membrankupplungselement nach Anspruch 7 bis 12, **dadurch gekennzeichnet, dass** Federelemente (242) einer ersten Gruppe zumindest teilweise einen radialen Abstand zwischen dem einen (7) der einander paarweise zugeordneten Umfangsbereichen und einem Zwischenring (244) der Federanordnung überbrücken und dass Federelemente (243) einer zweiten Gruppe zumindest teilweise einen radialen Abstand zwischen dem anderen (7') der einander paarweise zugeordneten Umfangsbereichen und dem oder einem weiteren Zwischenring (244) der Federanordnung überbrücken.

14. Membrankupplungselement nach einem der Ansprüche 7 bis 13, **dadurch gekennzeichnet, dass** die Federelemente (28; 42; 128, 128'; 142, 143; 242, 243) eine in Richtung ihrer Erstreckung zwischen den Umfangsbereichen (7, 7') bzw. zwischen dem Umfangsbereich (7, 7') und einem/dem Zwischenring (44; 46; 144; 244) variierende wirksame Querschnittsfläche aufweisen, vorzugsweise derart, dass die Federelemente
in einem mittleren Bereich ihrer Erstreckungslänge weniger biegesteif als in den Endbereichen ihrer Erstreckungslänge sind,
oder/und
in den Endbereichen ihrer Erstreckungslängen verschiedene Biegesteifigkeiten aufweisen,
insbesondere um Biegespannungsüberhöhungen entlang ihrer Erstreckungslänge zu vermeiden.

15. Membrankupplungselement nach Anspruch 14, **dadurch gekennzeichnet, dass** die wirksame Querschnittsfläche derart entlang der jeweiligen Erstreckungslänge der Federelemente (28; 42; 128, 128'; 142, 143; 242, 243) variiert, dass bei einer Biegeauslenkung in Folge einer Relativverdrehung zwischen den Umfangsbereichen (7, 7') entlang der Erstreckungslänge im Wesentlichen eine konstante Biegespannung im Federelement (28; 42; 128, 128'; 142, 143; 242; 243) auftritt.

16. Membrankupplungselement nach Anspruch 14 oder 15, ferner zumindest rückbezogen auf Anspruch 10 oder 11, **dadurch gekennzeichnet, dass** die Federelemente (28; 42; 128, 128'; 142, 143; 242, 243) in einem Bereich geringerer Biegesteifigkeit eine größere Ausdehnung in Radialrichtung als in Umfangsrichtung aufweisen.

17. Membrankupplungselement nach Anspruch 14 oder 15, ferner zumindest rückbezogen auf Anspruch 12 oder 13, **dadurch gekennzeichnet, dass** die Federelemente (28; 42; 128, 128'; 142, 143; 242, 243) in einem Bereich geringerer Biegesteifigkeit eine größere Ausdehnung in Axialrichtung als in Umfangsrichtung aufweisen.

18. Membrankupplungselement nach einem der Ansprüche 7 bis 17, **dadurch gekennzeichnet, dass** Federanordnung (16) in einem jeweiligen Übergangsbereich zwischen den die Federabschnitte (28) bildenden Federelementen und den Verbindungsabschnitten (32) bzw. dem Verbindungsringabschnitt (41) abgerundet ausgeführt ist, um Biegespannungsüberhöhung in Folge von Kerbwirkung zu vermeiden.

19. Membrankupplungselement nach einem der Ansprüche 1 bis 18, jedenfalls rückbezogen auf Anspruch 6, **dadurch gekennzeichnet, dass** die Federanordnung (16) zwei axial im Abstand voneinander angeordnete Gruppen von Verbindungsabschnitten (32) oder zwei Verbindungsringabschnitte (41) aufweist, die jeweils an einem zugeordneten der Umfangsbereiche (7, 7') angebunden sind.

20. Membrankupplungselement nach Anspruch 19, **dadurch gekennzeichnet, dass** die Federanordnung (16) wenigstens einen einteilig ausgeführten; von den sich mäanderförmig in Umfangsrichtung und axialer Richtung erstreckenden Federabschnitten (28) und Verbindungsabschnitten (32) gebildeten Federring aufweist.

21. Membrankupplungselement nach Anspruch 19, **dadurch gekennzeichnet, dass** die Federanordnung (16) wenigstens einen einteilig ausgeführten, von den beiden Verbindungsringabschnitten (41) und den sich axial zwischen diesen erstreckenden Federabschnitten (28) gebildeten Federring aufweist, der in Umfangsrichtung verteilt Durchbrüche (30) aufweist, die von den Verbindungsringabschnitten (41) und jeweils zwei benachbarten Federabschnitten (28) begrenzt sind.

22. Membrankupplungselement nach einem der Ansprüche 1 bis 16, **dadurch gekennzeichnet, dass** die voneinander gesonderten Federelemente (42) zusammen mit zwei axial im Abstand voneinander angeordneten, die Federelemente (42) haltenden Ringteilen (22, 24) einen Federring bilden, der in Umfangsrichtung verteilt Durchbrüche aufweist, die von den Ringteilen (22, 24) und jeweils zwei benachbarten Federelementen (42) begrenzt sind.

23. Membrankupplungselement nach einem der Ansprüche 1 bis 16, jedenfalls rückbezogen auf Anspruch 12, **dadurch gekennzeichnet, dass** die Federelemente (127), ggf. Blattfederelemente, einen am Zwischenring (144) zugfest angebundenen Basisabschnitt (129) und zwei einteilig über den Basisabschnitt zusammenhängende, axial gegeneinander versetzte Überbrückungsabschnitte (128) aufweisen, die jeweils an einem zugeordneten der Umfangsbereiche (7, 7') zugfest angebunden sind.

24. Membrankupplungselement nach einem der Ansprüche 1 bis 16, jedenfalls rückbezogen auf Anspruch 13, **dadurch gekennzeichnet, dass** die Federelemente (142; 242), ggf. Blattfederelemente, der ersten Gruppe und die Federelemente (143; 243), ggf. Blattfederelemente, der zweiten Gruppe axial gegeneinander versetzt sind oder/und in Umfangsrichtung sich abwechselnd vorgesehen sind und jeweils einerseits am Zwischenring (144; 244) zugfest angebunden und andererseits an einem zugeordneten der Umfangsbereiche (7, 7') zugfest angebunden sind.

25. Membrankupplungselement nach Anspruch 23 oder 24, **dadurch gekennzeichnet, dass** die Federelemente (128, 128'; 242, 243) mittels eines jeweiligen Ringteils (122, 124; 222, 224) am betreffenden Umfangsbereich (7) angebunden sind und dass wenigstens eines der Ringteile von einer Ringbasis axial vorstehende Federabschnitte (68; 268) aufweist, die radial elastisch auslenkbar sind und an denen die Federelemente (128, 128 ; 242, 243) angebunden sind.

26. Membrankupplungselement nach einem der vorhergehenden Ansprüche, **dadurch gekennzeichnet, dass** die Federanordnung (16; 116; 216) mit dem jeweiligen Umfangsbereich (7, 7') oder Ringteil (22, 24; 122, 124; 222, 224) einteilig zusammenhängt oder - vorzugsweise - unter Anwendung einer stoffschlüssigen Verbindungstechnik stoffschlüssig an dem jeweiligen Umfangsbereich (7, 7') oder Ringteil (22, 24; 122, 124; 222, 224) angebunden ist.

27. Membrankupplungselement nach einem der vorhergehenden Ansprüche, jedenfalls rückbezogen auf Anspruch 2, **dadurch gekennzeichnet, dass** das Ringteil (22, 24; 122, 124; 222, 224) zumindest in Bezug auf in Axialrichtung wirkende Kräfte formschlüssig oder/und unter Anwendung einer stoffschlüssigen Verbindungstechnik stoffschlüssig an dem jeweiligen Umfangsbereich (7, 7') angebunden ist.

28. Membrankupplungselement nach Anspruch 27, **dadurch gekennzeichnet, dass** das Ringteil (22, 24; 122, 124; 222, 224) mit dem jeweiligen Umfangsbereich (7, 7') in formschlüssigen Drehmitnahmeeingriff steht.

29. Membrankupplungselement nach einem der vorhergehenden Ansprüche, **dadurch gekennzeichnet, dass** die Federanordnung (16; 116; 216) wenigstens einen Zwischenring (44; 46; 144; 244) aufweist, an dem Federelemente (28; 42; 128, 128'; 142, 143; 242, 243) der Federanordnung (16; 116; 216) unter Anwendung einer stoffschlüssigen Verbindungstechnik stoffschlüssig angebunden sind.

30. Membrankupplungselement nach einem der Ansprüche 26 bis 29, **dadurch gekennzeichnet, dass** die stoffschlüssige Verbindungstechnik eine Schweißtechnik, vorzugsweise eine Elektronenstrahl-Schweißtechnik ist.

31. Membrankupplungselement nach einem der vorhergehenden Ansprüche, jedenfalls rückbezogen auf einen der Ansprüche 19 bis 21, **dadurch gekennzeichnet, dass** die Federelemente (28) und die Verbindungsabschnitte (32) bzw. der Verbindungsringabschnitt (41) durch eine Materialentfernungstechnik, vorzugsweise eine Funkenerosionstechnik, aus einem Federringrohling herausgearbeitet sind.

32. Membrankupplungselement nach einem der vorhergehenden Ansprüche, **gekennzeichnet durch** eine Drehschwingungsdämpfungsanordnung (78; 178), die auf Relativverdrehbewegungen zwischen den Umfangsbereichen (7, 7') anspricht.

33. Membrankupplungselement nach Anspruch 32, **dadurch gekennzeichnet, dass** die Drehschwingungsdämpfungsanordnung (78) wenigstens einen Reibungsdämpfer (80, 82) umfasst, der wenigstens zwei jeweils mit einem der Umfangsbereiche (7, 7') drehgekoppelte Reibflächen (87) aufweist, die miteinander reiben.

34. Membrankupplungselement nach Anspruch 33, **dadurch gekennzeichnet, dass** ein direkt oder indirekt an einem ersten (7) der Umfangsbereiche angebundenes Dämpfungsringteil (82) axial in Richtung zum anderen Umfangsbereich (7') vorstehende, radial elastisch auslenkbare, erste Reibflächen (87) aufweisende Federabschnitte (88) umfasst, die mit einer ringförmigen zweiten Reibfläche im Bereich des zweiten Umfangsbereichs (7') oder eines Gegen-Dämpfungsringteils (80), welches am zweiten Umfangsbereich (7') angebunden ist, reiben.

35. Membrankupplungselement nach Anspruch 33 oder 34, **gekennzeichnet durch** eine dem Reibungsdämpfer (78) zugeordnete, vorzugsweise zumindest teilweise in diesen integrierte Schmiermittelzufuhr (84).

36. Membrankupplungselement nach einem der Ansprüche 32 bis 35, **dadurch gekennzeichnet, dass** die Drehschwingungsdämpfungsanordnung (178) wenigstens einen Flüssigkeitsverdrängungsdämpfer umfasst, der wenigstens eine Flüssigkeitsaufnahmekammer (206; 207) aufweist, deren Flüssigkeitsaufnahmevolumen in Abhängigkeit von einem Relativdrehwinkel zwischen den Umfangsbereichen (7, 7') variabel ist.

37. Membrankupplungselement nach Anspruch 36, **dadurch gekennzeichnet, dass** der Flüssigkeitsverdrängungsdämpfer wenigstens einen durch ein Unterteilungselement (204) in zwei Flüssigkeitsaufnahmekammern (206; 207) unterteilten Aufnahmeraum (194) umfasst, wobei das Unterteilungselement (204) mit dem einen Umfangsbereich (7') drehgekoppelt ist und den Aufnahmeraum begrenzende Wandungsflächen (180) mit dem anderen Umfangsbereich (7) drehgekoppelt sind.

38. Membrankupplungselement nach Anspruch 37, **gekennzeichnet durch** wenigstens eine vorzugsweise im Unterteilungselement (204) ausgebildete Drosselverbindung (208) zwischen den Flüssigkeitsaufnahmekammern (206; 207).

39. Membrankupplungselement nach einem der Ansprüche 36 bis 38, **dadurch gekennzeichnet, dass** der Flüssigkeitsverdrängungsdämpfer einen darin integrierten Reibungsdämpfer nach einem der Ansprüche 33 bis 35 umfasst.

40. Membrankupplungselement nach einem der Ansprüche 36 bis 39, mit einer dem Flüssigkeitsverdrängungsdämpfer zugeordneten, vorzugsweise zumindest teilweise in diesen integrierten Dämpfungsflüssigkeitszufuhr (196; 198; 200), zur Zufuhr von Dämpfungsflüssigkeit in die Flüssigkeitsaufnahmekammer oder Flüssigkeitsaufnahmekammern (206; 207).

41. Membrankupplungs-Drehmomentübertragungseinrichtung, umfassend wenigstens ein Membrankupplungselement (10, 10') nach einem der vorhergehenden Ansprüche, welches axial zwischen einem eine Eingangsseite der Drehmomentübertragungseinrichtung bildenden Anschlussteil (18), ggf. Wellenanschlussflansch, und einem eine Ausgangsseite der Drehmomentübertragungseinrichtung bildenden Anschlussteil (18), ggf. Wellenanschlussflansch, angeordnet ist und mit diesen in Drehmomentübertragungsverbindung steht.

42. Membrankupplungs-Drehmomentübertragungseinrichtung nach Anspruch 41, **gekennzeichnet durch** wenigstens eine Verbindungswelle (20), die wenigstens ein dem einen Anschlussteil (18) axial näheres Membrankupplungselement (10) mit wenigstens einem dem anderen Anschlussteil (18') axial näheren Membrankupplungselement (10') verbindet.

43. Membrankupplungs-Drehmomentübertragungseinrichtung nach Anspruch 41 oder 42, **dadurch gekennzeichnet, dass** die Anschlußteile (18, 18') und - wenn vorgesehen - die Verbindungswelle (20) an einem Umfangsbereich, insbesondere radial inneren Umfangsbereich (8, 8'), einer jeweiligen Membranscheibe (10, 10') unter Anwendung einer stoffschlüssigen Verbindungstechnik, vorzugsweise einer Schweißtechnik, höchstvorzugsweise einer Elektronenstrahl-Schweißtechnik, angebunden sind.

## Claims

1. Membrane coupling element (10) of a torque transmission device (1) comprising a group of at least two flexible elastic membrane discs (12, 14), which each have a radially outer and a radially inner circumferential section (7, 7', 8, 8') and are in torque transmission connection with one another at their circumferential sections which are assigned to one another in pairs and by means of which a torque transmission path runs between an input side and an output side of the membrane coupling element (10), wherein at least one spring arrangement (16; 116; 216) attached to the membrane discs (12, 14) is provided forming the torque transmission connection between two of the membrane discs (12, 14), thus lying in the torque transmission path and giving the membrane coupling element (10) rotational flexibility, which spring arrangement is secured with resistance to extension to the radially outer circumferential sections (7, 7') assigned to one another in pairs of these two membrane discs (12, 14) and extends in circumferential direction distributed along the latter,
**characterised in that**
the spring arrangement (16; 116) comprises spring sections (28; 128, 128') arranged distributed in circumferential direction along at least one of the circumferential sections (7, 7'), and wherein the spring arrangement (16) comprises at least one group of connecting sections (32; 122, 124) connecting at least two spring sections (28; 128, 128') adjacent to one another in circumferential direction and arranged distributed along the circumferential section (7, 7') or comprises at least one connecting ring section (41; 144; 244) connecting all of the spring sections (28; 128, 128') together.

2. Membrane coupling element according to claim 1, **characterised in that** the spring arrangement (16; 116; 216) is connected to the circumferential section (7, 7') by means of a separate ring part (22; 122; 222; 24; 124; 224) mounting the spring arrangement (16; 116; 216).

3. Membrane coupling element according to claim 1 or 2, **characterised in that** the spring arrangement (16; 116; 216) and/or the ring part (22; 122; 222; 24; 124; 224) forms a periphery of the membrane coupling element (10; 110) arranged on the circumferential section (7, 7') of the membrane discs (12, 14).

4. Membrane coupling element according to one of the preceding claims, **characterised in that** the spring arrangement (16; 116; 216) is designed to be more rigid, preferably much more rigid than the membrane discs (12, 14), in relation to axially working forces.

5. Membrane coupling element according to one of the preceding claims, **characterised in that** the spring arrangement (16; 116; 216) is designed to be more rigid, preferably much more rigid than the membrane discs (12, 14), in relation to radially acting forces.

6. Membrane coupling element according to one of the preceding claims, **characterised in that** the spring arrangement (16) is secured at its connecting ring section (41) or its connecting sections (32) to the circumferential section (7, 7'), possibly by means of the ring part (22, 24).

7. Membrane coupling element according to one of the preceding claims, **characterised in that** the spring arrangement (16; 116; 216) comprises flexible elastic spring elements (28; 128; 128'; 42; 142, 143; 242, 243) arranged distributed in circumferential direction, which are preferably in the form of spring webs, spring rods or spring leaves.

8. Membrane coupling element according to claim 7 and according to one of the preceding claims, **characterised in that** the spring elements (42; 142, 143; 242, 243) form the spring sections (28; 128; 128').

9. Membrane coupling element according to claim 7, **characterised in that** the spring elements are separate spring elements (42; 142, 143; 242, 243).

10. Membrane coupling element according to one of claims 7 to 9, **characterised in that** the spring elements (28; 42; 128, 128'; 142, 143; 242, 243) bridge at least partly an axial spacing between the circumferential sections (7, 7') allocated to one another in pairs.

11. Membrane coupling element according to one of claims 7 to 10, **characterised in that** spring elements (28) of a first group bridge at least partly an axial spacing between one (7) of the pairwise allocated circumferential sections and an intermediate ring (46) of the spring arrangement, and **in that** spring elements (28) of a second group bridge at least partly an axial distance between the other (7') of the pairwise allocated circumferential sections and the or an additional intermediate ring of the spring arrangement (16).

12. Membrane coupling element according to one of claims 7 to 11, **characterised in that** the spring elements (127, 128, 128') bridge at least partly a radial spacing between the pairwise allocated circumferential sections (7, 7') and/or **in that** the spring elements (142, 143) bridge at least partly a radial spacing between one (7) of the pairwise allocated circumferential sections
and an intermediate ring (144) of the spring arrangement and at least partly a radial spacing between the other (7') of the pairwise allocated circumferential sections and the intermediate ring (144).

13. Membrane coupling element according to claim 7 to 12, **characterised in that** spring elements (242) of a first group bridge at least partly a radial spacing between one (7) of the pairwise allocated circumferential sections and an intermediate ring (244) of the spring arrangement, and **in that** spring elements (243) of a second group bridge at least partly a radial spacing between the other (7') of the pairwise allocated circumferential sections and the intermediate ring (244) or an additional intermediate ring of the spring arrangement.

14. Membrane coupling element according to one of claims 7 to 13, **characterised in that** the spring elements (28; 42; 128, 128'; 142, 143; 242, 243) have an effective cross sectional surface varying in the direction of their extension between the circumferential sections (7, 7') or between the circumferential section (7, 7') and a/the intermediate ring (44; 46; 144; 244), preferably such that the spring elements
in a middle section of their extension length are less rigid than in the end parts of their extension length,
and/or
in the end sections of their extension lengths have varying flexural stiffness,
in particular to avoid excessive bending stresses along their extension length.

15. Membrane coupling element according to claim 14, **characterised in that** the effective cross sectional surface varies along the respective extension length of the spring elements (28; 42; 128, 128'; 142, 143; 242, 243), such that during a bending excursion resulting from a relative rotation between the circumferential sections (7, 7') along the extension length, there is essentially a constant bending stress in the spring element (28; 42; 128, 128'; 142, 143; 242; 243).

16. Membrane coupling element according to claim 14 or 15, also referring back at least to claim 10 or 11, **characterised in that** the spring elements (28; 42; 128, 128'; 142, 143; 242, 243) in a section of lower flexural stiffness have a greater extension in radial direction than in circumferential direction.

17. Membrane coupling element according to claim 14 or 15, also referring back at least to claim 12 or 13, **characterised in that** the spring elements (28; 42; 128, 128'; 142, 143; 242, 243) in a section of lower flexural stiffness have a greater extension in axial direction than in circumferential direction.

18. Membrane coupling element according to one of claims 7 to 17, **characterised in that** the spring arrangement (16) is designed to be rounded in a respective transitional area between the spring elements forming the spring sections (28) and the connecting sections (32) or the connection ring section (41) in order to avoid excessive bending stress as a result of indentation.

19. Membrane coupling element according to one of claims 1 to 18, at least referring back to claim 6, **characterised in that** the spring arrangement (16) comprises two groups of connecting sections (32) arranged spaced apart from one another axially or two connecting ring sections (41), which are connected respectively to one of the allocated circumferential sections (7, 7').

20. Membrane coupling element according to claim 19, **characterised in that** the spring arrangement (16) comprises at least one spring ring designed in one piece and formed by the spring sections (28) and connecting sections (32) extending in a meandering fashion in circumferential direction and axial direction.

21. Membrane coupling element according to claim 19, **characterised in that** the spring arrangement (16) comprises at least one spring ring designed in one piece and formed by the two connecting ring sections (41) and the spring sections (28) extending axially between the latter, which spring ring has openings (30) distributed in circumferential direction, which are delimited by the connecting ring sections (41) and two adjacent spring sections (28) respectively.

22. Membrane coupling element according to one of claims 1 to 16, **characterised in that** the separated spring elements (42) together with two ring parts (22, 24) arranged spaced apart axially and mounting the spring elements (42) form a spring ring, which has openings distributed in circumferential direction, which are delimited by the ring parts (22, 24) and two adjacent spring elements (42) respectively.

23. Membrane coupling element according to one of claims 1 to 16, at least referring back to claim 12, **characterised in that** the spring elements (127), possibly leaf spring elements, have a base section (129) connected with resistance to extension to the intermediate ring (144) and two bridging sections (128) connected in one piece by the base section and offset axially relative to one another, which are connected to one of the allocated circumferential sections (7, 7') with resistance to extension.

24. Membrane coupling element according to one of claims 1 to 16, at least referring back to claim 13, **characterised in that** the spring elements (142; 242), possibly leaf spring elements, of the first group and the spring elements (143; 243), possibly leaf spring elements, of the second group are offset axially relative to one another and/or or are provided alternately in circumferential direction and are connected with resistance to extension to the intermediate ring (144; 244) on the one hand and to one of the allocated circumferential sections (7, 7') with resistance to extension on the other hand.

25. Membrane coupling element according to one of claims 23 to 24, **characterised in that** the spring elements (128, 128'; 242, 243) are connected by means of a respective ring part (122, 124; 222, 224) to the respective circumferential area (7), and **in that** at least one of the ring parts comprises spring sections (68; 268) projecting axially from a ring base, which can be deflected radially elastically and to which the spring elements (128, 128'; 242, 243) are connected.

26. Membrane coupling element according to one of the preceding claims, **characterised in that** the spring arrangement (16; 116; 216) with the respective circumferential section (7, 7') or ring part (22, 24; 122, 124; 222, 224) connects in one piece or - preferably - by using a material-joining connecting technique is connected in a material-joined manner to the respective circumferential section (7, 7') or ring part (22, 24; 122, 124; 222, 224).

27. Membrane coupling element according to one of the preceding claims, at least referring back to claim 2, **characterised in that** the ring part (22, 24; 122, 124; 222, 224) at least with respect to the forces acting in axial direction in a form-joined manner and/or by using a material-joining connecting technique is joined to the respective circumferential section (7, 7') in a material-joined manner.

28. Membrane coupling element according to claim 27, **characterised in that** the ring part (22, 24; 122, 124; 222, 224) is in form-closed rotary drive engagement with the respective circumferential section (7, 7').

29. Membrane coupling element according to one of the preceding claims, **characterised in that** the spring arrangement (16; 116; 216) comprises at least one intermediate ring (44; 46; 144; 244) onto which spring elements (28; 42; 128, 128'; 142, 143; 242, 243) of the spring arrangement (16; 116; 216) are attached in a material-joined manner by using a material-joining connecting technique.

30. Membrane coupling element according to one claims 26 to 29, **characterised in that** the material-joining connecting technique is a welding technique, preferably an electron beam welding technique.

31. Membrane coupling element according to one of the preceding claims, at least referring back to one of claims 19 to 21, **characterised in that** the spring elements (28) and the connecting sections (32) or the connecting ring section (41) are worked from a spring ring blank by using a material removal technique, preferably a spark erosion technique .

32. Membrane coupling element according to one of the preceding claims, **characterised by** a torsion damping arrangement (78; 178) which responds to relative rotational movements between the circumferential sections (7, 7').

33. Membrane coupling element according to claim 32, **characterised in that** the torsion damping arrangement (78) comprises at least one friction damper (80, 82), which comprises at least two frictional surfaces (87) rotary-coupled to one of the circumferential sections (7, 7') which rub against one another.

34. Membrane coupling element according to claim 33, **characterised in that** a damping ring part (82) connected directly or indirectly to a first (7) of the circumferential sections comprises spring sections (88) projecting axially in the direction of the other circumferential section (7') and comprising radially flexible first friction faces (87) which rub with an annular second frictional surface in the region of the second circumferential section (7') or a counter-damping ring part (80), which is connected to a second circumferential section (7').

35. Membrane coupling element according to claim 33 or 34, **characterised by** a lubricant supply (84) allocated to the friction damper (78), and preferably integrated at least partly into the latter.

36. Membrane coupling element according to one of claims 32 to 35, **characterised in that** the torsion damping arrangement (178) comprises at least one fluid displacement damper, which comprises at least one fluid holding chamber (206; 207), the fluid holding volume of which is variable according to a relative angle of rotation between the circumferential sections (7, 7').

37. Membrane coupling element according to claim 36, **characterised in that** the fluid displacement damper comprises at least one holding space (194) divided by a dividing element (204) into two fluid holding chambers (206; 207), wherein the dividing element (204) is pivotably coupled to one circumferential section (7') and wall faces (180) delimiting the holding space are pivotably coupled to the other circumferential section (7).

38. Membrane coupling element according to claim 37, **characterised by** at least one restrictive connection (208) between the fluid holding chambers (206; 207) formed preferably in a dividing element (204).

39. Membrane coupling element according to one of claims 36 to 38, **characterised in that** the fluid displacement damper comprises a friction damper integrated into the latter according to one of claims 33 to 35.

40. Membrane coupling element according to one of claims 36 to 39, with a damping fluid supply (196; 198; 200) allocated to the fluid displacement damper and integrated preferably at least partly into the latter, for supplying damping fluid to the fluid holding chamber or fluid holding chambers (206; 207).

41. Membrane coupling-torque transmission device, comprising at least one membrane coupling element (110, 10') according to one of the preceding claims, which is arranged axially between a connection piece (18) forming an input side of the torque transmission device, possibly a shaft connection flange, and a connection piece (18), possibly a shaft connection flange, forming an output side of the torque transmission device and is in torque transmission connection with the latter.

42. Membrane coupling-torque transmission device according to claim 41, **characterised by** at least one connecting shaft (20), which connects at least one membrane coupling element (10) which is axially closer to a connection part (18) with at least one membrane coupling element (10') axially closer to the other connection part (18').

43. Membrane coupling-torque transmission device, according to claim 41 or 42, **characterised in that** the connection parts (18, 18') and - if provided - the connecting shaft (20) are joined to a circumferential part, in particular radially inner circumferential part (8, 8'), of a respective membrane disc (10, 10') by using a material-joining connecting technique, preferably a welding technique, most preferably an electron beam welding technique.

## Revendications

1. Élément d'accouplement à membrane (10) d'un dispositif de transmission de couple (1), comprenant un groupe d'au moins deux disques de membrane (12, 14) élastiques en flexion, qui comportent chacun une zone périphérique radialement extérieure et une zone périphérique radialement intérieure (7, 7', 8, 8') et se trouvent en liaison de transmission de couple par leurs zones périphériques affectées par paires l'une à l'autre et par lesquelles un chemin de transmission de couple s'étend entre un côté entrée et un côté sortie de l'élément d'accouplement à membrane (10), sachant que
il est prévu au moins un agencement de ressorts (16 ; 116 ; 216) monté sur les disques de membrane (12, 14), réalisant la liaison de transmission de couple entre ces deux disques de membrane (12, 14) et se trouvant ainsi dans le chemin de transmission du couple, conférant à l'élément d'accouplement à membrane (10) une élasticité de rotation, qui est relié de façon résistante à la traction aux zones périphériques radialement extérieures (7, 7'), affectées par paires l'une à l'autre, de ces deux disques de membrane (12, 14) et s'étend dans la direction périphérique le long de ces dernières, **caractérisé en ce que**
l'agencement de ressorts (16 ; 116) comporte des tronçons à ressorts (28 ; 128 ; 128') disposés en étant répartis dans la direction périphérique le long d'au moins une des zones périphériques (7, 7') et **en ce que** l'agencement de ressorts (16) comporte au moins un groupe de tronçons de liaison (32 ; 122, 124) disposés répartis le long de la zone périphérique (7, 7'), reliant respectivement ensemble au moins deux tronçons à ressorts (28 ; 128 ; 128') voisins dans la direction périphérique, ou au moins un tronçon annulaire de liaison (41 ; 144 ; 244) reliant ensemble tous les tronçons à ressorts (28 ; 128 ; 128').

2. Élément d'accouplement à membrane selon la revendication 1, **caractérisé en ce que** l'agencement de ressorts (16 ; 116 ; 216) est relié à la zone périphérique (7, 7') au moyen d'une pièce annulaire distincte (22 ; 122 ; 222 ; 24 ; 124 ; 224) maintenant l'agencement de ressorts (16 ; 116 ; 216).

3. Élément d'accouplement à membrane selon la revendication 1 ou 2, **caractérisé en ce que** l'agencement de ressorts (16 ; 116 ; 216) ou/et la pièce annulaire (22 ; 122 ; 222 ; 24 ; 124 ; 224) forment une périphérie de l'élément d'accouplement à membrane (10 ; 110) disposée dans la zone périphérique (7, 7') des disques de membrane (12, 14).

4. Élément d'accouplement à membrane selon l'une quelconque des revendications précédentes, **caractérisé en ce que** l'agencement de ressorts (16 ; 116 ; 216) est plus rigide, de préférence beaucoup plus rigide, que les disques de membrane (12, 14) par rapport à des forces agissant axialement.

5. Élément d'accouplement à membrane selon l'une quelconque des revendications précédentes, **caractérisé en ce que** l'agencement de ressorts (16 ; 116 ; 216) est plus rigide, de préférence beaucoup plus rigide, que les disques de membrane (12, 14) par rapport à des forces agissant radialement.

6. Élément d'accouplement à membrane selon l'une quelconque des revendications précédentes, **caractérisé en ce que** l'agencement de ressorts (16) est relié à son tronçon annulaire de liaison (41), respectivement à ses tronçons de liaison (32) à la zone périphérique (7, 7'), le cas échéant par l'intermédiaire de la pièce annulaire (22, 24).

7. Élément d'accouplement à membrane selon l'une quelconque des revendications précédentes, **caractérisé en ce que** l'agencement de ressorts (16 ; 116 ; 216) comporte des éléments élastiques (28 ; 128 ; 128'; 42 ; 142, 143 ; 242, 243) disposés répartis dans la direction périphérique, élastiques à la flexion dans la direction périphérique, qui sont réalisés de préférence comme nervures élastiques, barreaux élastiques ou lames élastiques.

8. Élément d'accouplement à membrane selon la revendication 7 ainsi que selon l'une quelconque des revendications précédentes, **caractérisé en ce que** les éléments élastiques (42 ; 142, 143 ; 242, 243) forment les tronçons à ressort (28 ; 128 ; 128').

9. Élément d'accouplement à membrane selon la revendication 7, **caractérisé en ce que** les éléments élastiques sont des éléments élastiques (42 ; 142, 143 ; 242, 243) distincts les uns des autres.

10. Élément d'accouplement à membrane selon l'une quelconque des revendications 7 à 9, **caractérisé en ce que** les éléments élastiques (28 ; 42 ; 128 ; 128'; 142, 143 ; 242, 243) enjambent au moins en partie un écartement axial entre les zones périphériques (7, 7') affectées par paires les unes aux autres.

11. Élément d'accouplement à membrane selon l'une quelconque des revendications 7 à 10, **caractérisé en ce que** des éléments élastiques (28) d'un premier groupe enjambent au moins en partie un écartement axial entre l'une (7) des zones périphériques affectées par paires les unes aux autres et un anneau intermédiaire (46) de l'agencement de ressorts, et **en ce que** des éléments élastiques (28) d'un deuxième groupe enjambent au moins en partie un écartement axial entre l'autre (7') des zones périphériques affectées par paires les unes aux autres et l'anneau intermédiaire ou un autre anneau intermédiaire de l'agencement de ressorts (16).

12. Élément d'accouplement à membrane selon l'une quelconque des revendications 7 à 11, **caractérisé en ce que** les éléments élastiques (127, 128, 128') enjambent au moins en partie un écartement radial entre les zones périphériques (7, 7') affectées par paires les unes aux autres ou/et **en ce que** les éléments élastiques (142, 143) enjambent au moins en partie un écartement radial entre l'une (7) des zones périphériques affectées par paires les unes aux autres et un anneau intermédiaire (144) de l'agencement de ressorts, ainsi qu'au moins un écartement radial entre l'autre (7') des zones périphériques affectées par paires les unes aux autres et l'anneau intermédiaire (144).

13. Élément d'accouplement à membrane selon l'une quelconque des revendications 7 à 12, **caractérisé en ce que** des éléments élastiques (242) d'un premier groupe enjambent au moins en partie un écartement radial entre l'une (7) des zones périphériques affectées par paires les unes aux autres et un anneau intermédiaire (244) de l'agencement de ressorts et **en ce que** des éléments élastiques (243) d'un deuxième groupe enjambent au moins en partie un écartement radial entre l'autre (7') des zones périphériques affectées par paires les unes aux autres et l'anneau intermédiaire ou un autre anneau intermédiaire (244) de l'agencement de ressorts.

14. Élément d'accouplement à membrane selon l'une quelconque des revendications 7 à 13, **caractérisé en ce que** les éléments élastiques (28 ; 42 ; 128 ; 128'; 142, 143 ; 242, 243) présentent une surface de section efficace variable dans la direction de leur extension entre les zones périphériques (7, 7'), respectivement entre la zone périphérique (7, 7') et un/l'anneau intermédiaire (44 ; 46 ; 144 ; 244), de préférence de telle sorte que les éléments élastiques
soient moins rigides en flexion dans une zone médiane de leur extension en longueur que dans les zones d'extrémité de leur extension en longueur,
ou/et
présentent différentes rigidités en flexion dans les zones d'extrémité de leur extension en longueur,
en particulier pour éviter des excès de contrainte de flexion le long de leur extension en longueur.

15. Élément d'accouplement à membrane selon la revendication 14, **caractérisé en ce que** la surface de section efficace varie le long de l'extension en longueur respective des éléments élastiques (28 ; 42 ; 128 ; 128'; 142, 143 ; 242, 243) de telle sorte que, lors d'une élongation de flexion par suite d'une rotation relative entre les zones périphériques (7, 7'), une contrainte de flexion sensiblement constante apparaît dans l'élément élastique (28 ; 42 ; 128 ; 128'; 142, 143 ; 242, 243) le long de l'extension en longueur.

16. Élément d'accouplement à membrane selon la revendication 14 ou 15, en outre au moins rapporté à la revendication 10 ou 11, **caractérisé en ce que** les éléments élastiques (28 ; 42 ; 128 ; 128'; 142, 143 ; 242, 243) présentent dans une zone de rigidité à la flexion diminuée une plus grande extension dans la direction radiale que dans la direction périphérique.

17. Élément d'accouplement à membrane selon la revendication 14 ou 15, en outre au moins rapporté à la revendication 12 ou 13, **caractérisé en ce que** les éléments élastiques (28 ; 42 ; 128 ; 128'; 142, 143 ; 242, 243) présentent dans une zone de rigidité à la flexion diminuée une plus grande extension dans la direction axiale que dans la direction périphérique.

18. Élément d'accouplement à membrane selon l'une quelconque des revendications 7 à 17, **caractérisé en ce que**, dans une zone de transition respective entre les éléments élastiques formant les tronçons à ressort (28) et les tronçons de liaison (32), respectivement le tronçon annulaire de liaison (41), l'agencement de ressorts (16) est exécuté arrondi pour éviter les excès de contraintes de flexion par suite d'effets d'entaille.

19. Élément d'accouplement à membrane selon l'une quelconque des revendications 1 à 18, rapporté en tout cas à la revendication 6, **caractérisé en ce que** l'agencement de ressorts (16) comporte deux groupes de tronçons de liaison (32) disposés axialement à distance l'un de l'autre ou deux tronçons annulaires de liaison (41), qui sont reliés chacun à une zone périphérique (7, 7') affectée.

20. Élément d'accouplement à membrane selon la revendication 19, **caractérisé en ce que** l'agencement de ressorts (16) comporte au moins un anneau élastique réalisé en une pièce, formé par les tronçons à ressort (28) et les tronçons de liaison (32) s'étendant en forme de méandres dans la direction périphérique et dans la direction axiale.

21. Élément d'accouplement à membrane selon la revendication 19, **caractérisé en ce que** l'agencement de ressorts (16) comporte au moins un anneau élastique réalisé en une pièce, formé par les deux tronçons annulaires de liaison (41) et les tronçons à ressort (28) s'étendant axialement entre ces derniers, qui comporte des traversées (30) distribuées dans la direction périphérique, qui sont limitées par les tronçons annulaires de liaison (41) et par deux tronçons à ressort (28) respectivement voisins.

22. Élément d'accouplement à membrane selon l'une quelconque des revendications 1 à 16, **caractérisé en ce que** les éléments élastiques (42) distincts les uns des autres, ensemble avec deux pièces annulaires (22, 24) disposées axialement à distance l'une de l'autre, maintenant les éléments élastiques (42), forment un anneau élastique qui comporte des traversées distribuées dans la direction périphérique, qui sont limitées par les pièces annulaires (22, 24) et par deux éléments élastiques (42) respectivement voisins.

23. Élément d'accouplement à membrane selon l'une quelconque des revendications 1 à 16, rapporté en tout cas à la revendication 12, **caractérisé en ce que** les éléments élastiques (127), le cas échéant des éléments de ressorts à lames, comportent un tronçon de base (129) relié de façon résistante à la traction à la bague intermédiaire (144) et deux tronçons de pontage (128) solidaires en une pièce par l'intermédiaire du tronçon de base, décalés axialement l'un par rapport à l'autre, qui sont reliés chacun de façon résistante à la traction à une des zones périphériques (7, 7') affectées.

24. Élément d'accouplement à membrane selon l'une quelconque des revendications 1 à 16, rapporté en tout cas à la revendication 13, **caractérisé en ce que** les éléments élastiques (142 ; 242), le cas échéant des éléments de ressorts à lames, du premier groupe, et les éléments élastiques (143 ; 243), le cas échéant des éléments de ressorts à lames, du deuxième groupe, sont décalés axialement les uns par rapport aux autres ou/et sont prévus s'alternant dans la direction périphérique et sont reliés chacun d'un côté de façon résistante à la traction à l'anneau intermédiaire (144 ; 244) et de l'autre côté de façon résistante à la traction à une des zones périphériques (7, 7') affectées.

25. Élément d'accouplement à membrane selon la revendication 23 ou 24, **caractérisé en ce que** les éléments élastiques (128, 128'; 242, 243) sont reliés au moyen d'une pièce annulaire respective (122, 124 ; 222, 224) à la zone périphérique (7) concernée et **en ce qu'**au moins une des pièces annulaires comporte des tronçons à ressort (68 ; 268) dépassant radialement d'une base annulaire, qui sont mobiles élastiquement dans la direction radiale et auxquels sont reliés les éléments élastiques (128, 128'; 242, 243).

26. Élément d'accouplement à membrane selon l'une quelconque des revendications précédentes, **caractérisé en ce que** l'agencement de ressorts (16 ; 116 ; 216) est solidaire en une pièce de la zone périphérique (7, 7') ou de la pièce annulaire (22 ; 24 ; 122 ; 124 ; 222 ; 224) respective ou, de préférence, moyennant l'utilisation d'une technique d'assemblage à continuité de matière, est relié par continuité de matière à la zone périphérique (7, 7') ou à la pièce annulaire (22 ; 24 ; 122 ; 124 ; 222 ; 224) respective.

27. Élément d'accouplement à membrane selon l'une quelconque des revendications précédentes, rapporté en tout cas à la revendication 2, **caractérisé en ce que** la pièce annulaire (22 ; 24 ; 122 ; 124 ; 222 ; 224), au moins en rapport avec les forces agissant dans la direction axiale, est reliée par conjugaison de forme, ou/et par continuité de matière moyennant l'utilisation d'une technique d'assemblage à continuité de matière, à la zone périphérique (7, 7') respective.

28. Élément d'accouplement à membrane selon la revendication 27, **caractérisé en ce que** la pièce annulaire (22 ; 24 ; 122 ; 124 ; 222 ; 224) se trouve en prise d'entraînement en rotation par conjugaison de forme avec la zone périphérique (7, 7') respective.

29. Élément d'accouplement à membrane selon l'une quelconque des revendications précédentes, **caractérisé en ce que** l'agencement de ressorts (16 ; 116 ; 216) comporte au moins un anneau intermédiaire (44 ; 46 ; 144 ; 244) auquel des éléments élastiques (28 ; 42 ; 128 ; 128'; 142, 143 ; 242, 243) de l'agencement de ressorts (16 ; 116 ; 216) sont reliés moyennant l'utilisation d'une technique d'assemblage par continuité de matière.

30. Élément d'accouplement à membrane selon l'une quelconque des revendications 26 à 29, **caractérisé en ce que** la technique d'assemblage par continuité de matière est une technique de soudage, de préférence une technique de soudage par faisceau d'électrons.

31. Élément d'accouplement à membrane selon l'une quelconque des revendications précédentes, rapporté en tout cas à l'une quelconque des revendications 19 à 21, **caractérisé en ce que** les éléments élastiques (28) et les tronçons de liaison (32), respectivement le tronçon annulaire de liaison (41), sont usinés à partir d'une ébauche d'anneau élastique par une technique d'enlèvement de matière, de préférence par une technique d'électroérosion.

32. Élément d'accouplement à membrane selon l'une quelconque des revendications précédentes, **caractérisé par** un dispositif d'amortissement des oscillations de rotation (78 ; 178) qui réagit à des mouvements de décalage en rotation entre les zones périphériques (7, 7').

33. Élément d'accouplement à membrane selon la revendication 32, **caractérisé en ce que** le dispositif d'amortissement des oscillations de rotation (78) comprend au moins un amortisseur à friction (80, 82) qui comporte au moins deux surfaces de friction (87) couplées chacune en rotation à une des zones périphériques (7, 7'), qui frottent l'une contre l'autre.

34. Élément d'accouplement à membrane selon la revendication 33, **caractérisé en ce qu'**un élément amortisseur (82) relié directement ou indirectement à une première (7) des zones périphériques, comprend des tronçons à ressort (88) comportant des premières surfaces de friction (87), dépassant axialement en direction de l'autre zone périphérique (7'), mobiles élastiquement dans la direction radiale, qui frottent avec une deuxième surface de friction annulaire au niveau de la deuxième zone périphérique (7') ou d'une pièce annulaire d'amortissement antagoniste (80), laquelle est reliée à la deuxième zone périphérique (7').

35. Élément d'accouplement à membrane selon la revendication 33 ou 34, **caractérisé par** une alimentation en lubrifiant (84) affectée à l'amortisseur à friction (78), de préférence intégrée au moins en partie dans ce dernier.

36. Élément d'accouplement à membrane selon l'une quelconque des revendications 32 à 35, **caractérisé en ce que** le dispositif d'amortissement des oscillations de rotation (178) comporte au moins un amortisseur à déplacement de liquide, qui comporte au moins une chambre de réception de liquide (206 ; 207) dont le volume de réception de liquide est variable en fonction d'un angle de rotation relatif entre les zones périphériques (7, 7').

37. Élément d'accouplement à membrane selon la revendication 36, **caractérisé en ce que** l'amortisseur à déplacement de liquide comprend au moins un espace de réception, divisé en deux chambres de réception de liquide (206 ; 207) par un élément de division (204), l'élément de division (204) étant couplé en rotation à l'une zone périphérique (7') et les surfaces de paroi (180) limitant l'espace de réception étant couplées en rotation à l'autre zone périphérique (7).

38. Élément d'accouplement à membrane selon la revendication 37, **caractérisé par** au moins un étranglement de communication (208) entre les chambres de réception de liquide (206 ; 207), formé de préférence dans l'élément de division (204).

39. Élément d'accouplement à membrane selon l'une quelconque des revendications 36 à 38, **caractérisé en ce que** l'amortisseur à déplacement de liquide comprend un amortisseur à friction selon l'une quelconque des revendications 33 à 35, intégré dedans.

40. Élément d'accouplement à membrane selon l'une quelconque des revendications 36 à 39 avec une alimentation en liquide d'amortissement (196 ; 198 ; 200) affectée à l'amortisseur à déplacement de liquide, de préférence intégrée au moins en partie dans celui-ci, pour l'alimentation en liquide d'amortissement dans la chambre de réception de liquide ou dans les chambres de réception de liquide (206 ; 207).

41. Dispositif de transmission du couple par un accouplement à membrane, comprenant au moins un élément d'accouplement à membrane (10, 10') selon l'une quelconque des revendications précédentes, lequel est disposé axialement entre une pièce de raccordement (18), le cas échéant une bride de raccordement d'arbre, formant un côté entrée du dispositif de transmission du couple, et une pièce de raccordement (18), le cas échéant une bride de raccordement d'arbre, formant un côté sortie du dispositif de transmission du couple, et se trouve en liaison de transmission du couple avec ces dernières.

42. Dispositif de transmission du couple par un accouplement à membrane selon la revendication 41, **caractérisé par** au moins un arbre de liaison (20), qui relie au moins un élément d'accouplement à membrane (10) axialement plus proche de l'une pièce de raccordement (18) à au moins un élément d'accouplement à membrane (10') axialement plus proche de l'autre pièce de raccordement (18').

43. Dispositif de transmission du couple par un accouplement à membrane selon la revendication 41 ou 42, **caractérisé en ce que** les pièces de raccordement (18, 18') et, s'il est prévu, l'arbre de liaison (20), sont reliés à une zone périphérique d'un disque de membrane respectif (10, 10'), en particulier à une zone périphérique radialement intérieure (8, 8'), moyennant l'utilisation d'une technique d'assemblage à continuité de matière, de préférence d'une technique de soudage, de façon préférée entre toutes d'une technique de soudage par faisceau d'électrons.
